# EUROPEAN PATENT SPECIFICATION

(11) **EP 4 192 081 B1**
(45) Date of publication and mention of the grant of the patent: **25.02.2026**
(21) Application number: 21860060.9
(22) Date of filing: 02.08.2021
(51) Int. Cl.: H04W 24/02, H04W 28/02, H04W 28/24, H04W 24/08, H04W 28/22

(54) **COMMUNICATION METHOD AND DEVICE, AND STORAGE MEDIUM**
KOMMUNIKATIONSVERFAHREN UND -VORRICHTUNG SOWIE SPEICHERMEDIUM
PROCÉDÉ ET DISPOSITIF DE COMMUNICATION, ET SUPPORT D'ENREGISTREMENT

(30) Priority: 31.08.2020 CN 202010899126; 16.03.2021 CN 202110280880
(43) Date of publication of application: 07.06.2023
(73) Proprietor: Huawei Technologies Co., Ltd., Shenzhen, Guangdong 518129 (CN)
(72) Inventor: WU, Fengwei, Shenzhen, Guangdong 518129 (CN); ZHANG, Yunhua, Shenzhen, Guangdong 518129 (CN); ZHU, Ye, Shenzhen, Guangdong 518129 (CN); SHI, Shufeng, Shenzhen, Guangdong 518129 (CN); DING, Hui, Shenzhen, Guangdong 518129 (CN)
(74) Representative: Goddar, Heinz J.
(86) International application number: PCT/CN2021/110120
(87) International publication number: WO 2022/042220

(56) References cited:
- WO-A1-2020/057717
- WO-A1-2020/073159
- WO-A1-2020/074108
- WO-A1-2020/145031
- WO-A1-2020/145031
- CN-A- 110 049 517
- "3rd Generation Partnership Project; Technical Specification Group Services and System Aspects; Study on enhancement of support for Edge Computing in 5G Core network (5GC) (Release 17)", no. V0.4.0, 3 August 2020 (2020-08-03), pages 1 - 189, XP051925857, Retrieved from the Internet <URL:ftp://ftp.3gpp.org/Specs/archive/23_series/23.748/23748-040.zip 23748-040_MCCclean.docx> [retrieved on 20200803]

## Description

This application claims priority to Chinese Patent Application No. 202010899126.2, filed with the China National Intellectual Property Administration on August 31, 2020 and entitled "COMMUNICATION METHOD, DEVICE, AND STORAGE MEDIUM", and to Chinese Patent Application No. 202110280880.2, filed with the China National Intellectual Property Administration on March 16, 2021 and entitled "COMMUNICATION METHOD, DEVICE, AND STORAGE MEDIUM".

### TECHNICAL FIELD

This application relates to the field of communication technologies, and in particular, to a communication method, a device, and a storage medium.

### BACKGROUND

With development of communication technologies, how to improve quality of service of a data flow becomes a problem to be urgently resolved.

In a conventional technology, when a radio access network cannot meet or can re-meet a guaranteed bit rate of a data flow, the radio access network may send a notification message to a core network device, and the core network device may adjust quality of service of the data flow by using a solution, for example, by adjusting the guaranteed bit rate to an alternative guaranteed bit rate.

However, in a process of implementing this application, the prior art has at least the following disadvantage: Accuracy of adjusting, by the core network device, the quality of service of the data flow is low.

WO 2020/145031 A1 discloses an access network node comprising: means for transmitting, to a session management function node, a notification message including information indicating that at least one Quality of Service, QoS, target for a protocol Data Unit, PDU, session cannot be fulfilled; and means for receiving from the session management function node, information indicating at least one alternative QoS information. The access network node further comprises means for forwarding the information indicating that at least one alternative QoS information received from the session management function node to a user equipment, UE.

"3rd Generation Partnership Project; Technical Specification Group Services and System Aspects; Study on enhancement of support for Edge Computing in 5G Core network (5GC) (Release 17)", 3GPP TR 23.748 V0.4.0 discloses an application layer or application function to provide influence parameters for edge application traffic to an NEF, indicating Spatial Validity Condition defining a geographical zone identifier where policy requirements are applicable.

### SUMMARY

To resolve the foregoing technical problem, embodiments of this application provide three interrelated communication methods.

According to a first aspect, an embodiment of this application provides a communication method, applied to an application function device. The method includes:
receiving a notification message reported by a radio access network device, wherein the notification message indicates that the radio access network device cannot meet a guaranteed bit rate of a data flow of user equipment, and the notification message comprises network characteristic information of a radio air interface;
generating, based on the network characteristic information, a first adjustment policy for adjusting quality of service of the data flow;
sending a first indication message to the user equipment, wherein the first indication message indicates the user equipment to adjust the quality of service of the data flow according to the first adjustment policy;
if the network characteristic information does not include a predefined signal to interference plus noise ratio level, or the signal to interference plus noise ratio level is less than the first threshold, generating, based on the network characteristic information, a second indication message that includes a second adjustment policy for adjusting quality of service of the data flow, wherein the second indication message indicates the user equipment to adjust the quality of service of the data flow according to the second adjustment policy, and sending the second indication message to the user equipment; and
if the network characteristic information does not include a received reference signal power level, or the received reference signal power level is less than the second threshold, generating, based on the network characteristic information, a third indication message that includes a third adjustment policy for adjusting quality of service for the data flow, wherein the third indication message indicates the user equipment to adjust the quality of service of the data flow according to the third adjustment policy, and sending the third indication message to the user equipment; wherein the first, the second, and the third adjustment policy indicate different adjustments based on different metrics.

According to a second aspect, an embodiment of this application further provides a communication method, applied to a radio access network device. The method includes:
if the radio access network device cannot meet a guaranteed bit rate of a data flow of user equipment, reporting a notification message to an application function device, wherein the notification message comprises network characteristic information of a radio air interface, and the network characteristic information is used by the application function device to generate a first adjustment policy for the data flow based on the network characteristic information;
receiving a data flow whose quality of service is adjusted by the user equipment according to the first adjustment policy;
receiving a data flow whose quality of service is adjusted by the user equipment according to a second adjustment policy; and
receiving a data flow whose quality of service is adjusted by the user equipment according to a third adjustment policy; wherein the first, the second, and the third adjustment policy indicate different adjustments based on different metrics.

According to a third aspect, an embodiment of this application further provides a communication method, applied to user equipment. The method includes:
receiving a first indication message sent by an application function device, wherein the indication message indicates the user equipment to adjust quality of service of a data flow according to a first adjustment policy, and the first adjustment policy is a policy that is for adjusting the quality of service of the data flow and that is generated by the application function device based on network characteristic information of a network in which the user equipment is located;
adjusting the data flow according to the first adjustment policy;
sending an adjusted data flow to a radio access network device;
in response to receiving a second indication message sent by the application function device, wherein the second indication message indicates the user equipment to adjust quality of service of the data flow according to a second adjustment policy, adjusting the data flow according to the second adjustment policy, and sending an adjusted data flow to the radio access network device;
in response to receiving a third indication message sent by the application function device, wherein the third indication message indicates the user equipment to adjust quality of service of the data flow according to a third adjustment policy, adjusting the data flow according to the third adjustment policy, and sending an adjusted data flow to the radio access network device; wherein the first, the second, and the third adjustment policy indicate different adjustments based on different metrics.

### BRIEF DESCRIPTION OF DRAWINGS

FIG. 1 is a schematic diagram of a network architecture according to an embodiment of this application;
FIG. 2 is a schematic diagram of a 5G network architecture according to an embodiment of this application;
FIG. 3 is a schematic flowchart of a communication method according to an embodiment of this application;
FIG. 4A and FIG. 4B are a schematic flowchart of a communication method according to an embodiment of this application;
FIG. 5 is a schematic flowchart of a communication method which does not form part of the invention as defined by the appended claims.
FIG. 6A and FIG. 6B are a schematic flowchart of a communication method which does not form part of the invention as defined by the appended claims.
FIG. 7A and FIG. 7B are a schematic flowchart of a communication method which does not form part of the invention as defined by the appended claims.
FIG. 8 is a schematic flowchart of a communication method which does not form part of the invention as defined by the appended claims.
FIG. 9 is a schematic diagram of a method in which a radio access network device triggers an application function device to perform policy adjustment which does not form part of the invention as defined by the appended claims. FIG. 10 is a schematic diagram of an application function device according to an embodiment of this application;
FIG. 11 is a schematic diagram of a radio access network device according to an embodiment of this application;
FIG. 12 is a schematic diagram of user equipment according to an embodiment of this application; and
FIG. 13 is a block diagram of an electronic device according to an embodiment of this application.

### DESCRIPTION OF EMBODIMENTS

Example embodiments are described in detail herein, and examples of the example embodiments are presented in the accompanying drawings. When the following descriptions relate to the accompanying drawings, unless specified otherwise, same numbers in different accompanying drawings represent a same or similar element. Implementations described in the following example embodiments do not represent all implementations consistent with this application. On the contrary, the implementations are only examples of apparatuses and methods that are described in the appended claims in detail and that are consistent with some aspects of this application.

A communication method provided in embodiments of this application is applicable to various communication systems, for example, a 4G long term evolution (long term evolution, LTE) system, a 5th generation (5th generation, 5G) communication system, and another similar communication system.

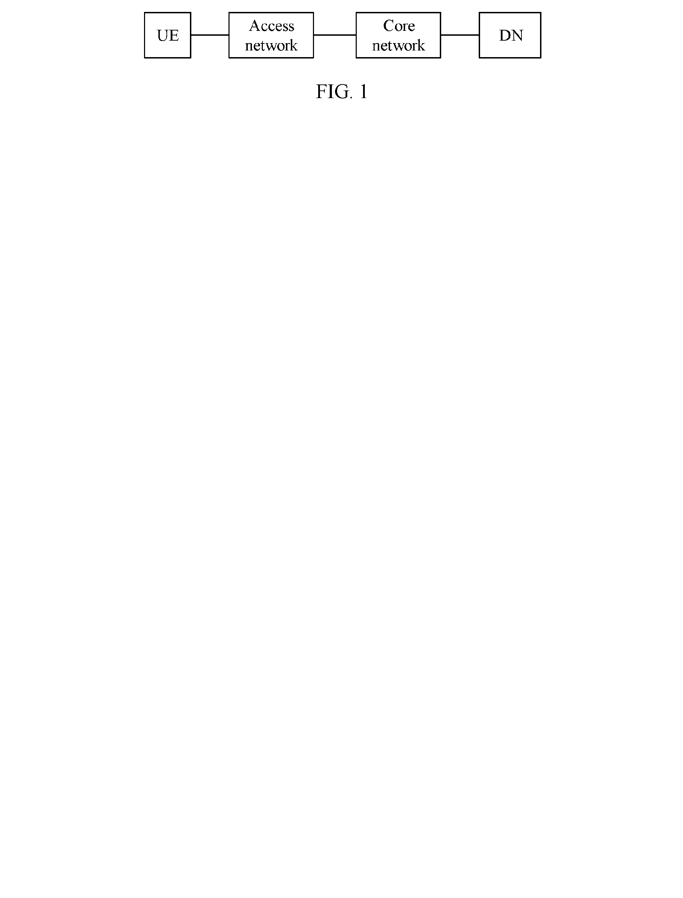

FIG. 1 is a schematic diagram of a network architecture to which a communication method according to an embodiment of this application is applicable.

As shown in FIG. 1, the network architecture includes user equipment (User Equipment, UE), an access network (access network, AN), a core network, and a data network (Data Network, DN).

The UE may include various handheld devices, vehicle-mounted devices, wearable devices, or computing devices that have a wireless communication function, or other processing devices connected to a wireless modem.

Specifically, the UE may be a mobile terminal, for example, a mobile phone (also referred to as a "cellular" phone), and a computer that has a mobile terminal. For example, the UE may be a portable, pocket-sized, handheld, computer built-in, or a vehicle-mounted mobile apparatus, which exchanges voice and/or data with a radio access network. The terminal device may alternatively be a device, for example, a personal communication service (Personal Communication Service, PCS) phone, a cordless telephone set, a session initiation protocol (Session Initiation Protocol, SIP) phone, a wireless local loop (Wireless Local Loop, WLL) station, or a personal digital assistant (Personal Digital Assistant, PDA), a tablet computer, a wireless modem (modem), a handheld device (handset), a laptop computer (laptop computer), and a machine type communication (Machine Type Communication, MTC) terminal. The terminal device may also be referred to as a system, a subscriber unit (Subscriber Unit), a subscriber station (Subscriber Station), a mobile station (Mobile Station), a remote station (Remote Station), a remote terminal (Remote Terminal), an access terminal (Access Terminal), a user terminal (User Terminal), a user agent (User Agent), a user device or user equipment (User Device or User Equipment), or the like. This is not limited herein.

An access network apparatus is mainly configured to implement functions such as a radio physical layer function, resource scheduling, radio resource management, radio access control, and mobility management.

A core network device may include a management device and a gateway device. The management device is mainly used for device registration, security authentication, mobility management, location management, and the like of the terminal device. The gateway device is mainly configured to establish a channel with the terminal device, and forward a data packet between the terminal device and an external data network through the channel. The data network may include a network device (for example, a device such as a server or a router). The data network is mainly configured to provide a plurality of data services for the terminal device. It should be noted that FIG. 1 is merely a diagram of an example of the architecture. In addition to the function units shown in FIG. 1, the network architecture may include another function unit. This is not limited in embodiments of the present invention.

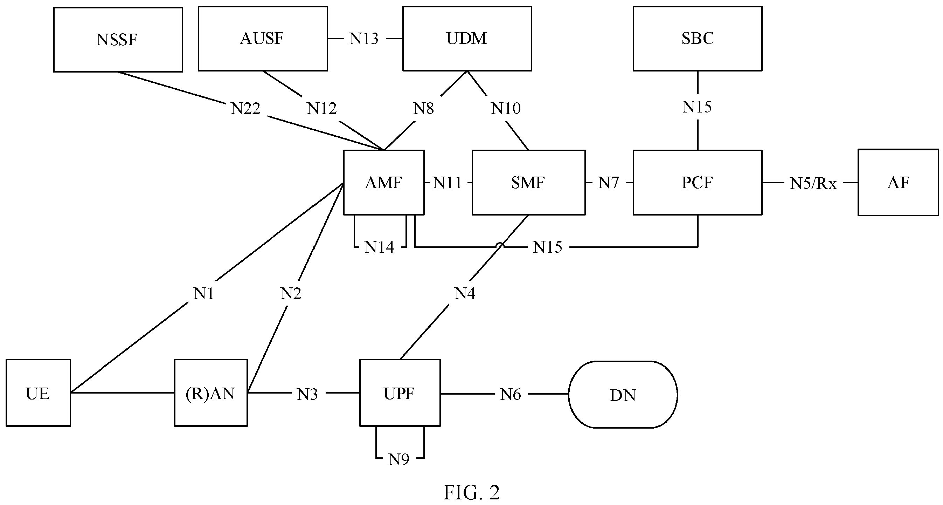

The network architecture may be a 5G network architecture. FIG. 2 is a schematic diagram of a 5G network architecture. The 5G system is also referred to as a new radio communication system, a new access technology (New Radio, NR), or a next generation mobile communication system.

An access network in the 5G system may be a radio access network (radio access network, (R)AN), and may be configured to implement functions such as a radio physical layer function, radio resource management, radio access control, and mobility management. For example, a (R)AN device in the 5G system may include a plurality of 5G-(R)AN nodes. The 5G-(R)AN node may include an access point (access point, AP) in a non-3GPP access network such as a Wi-Fi network, a next-generation base station (which may be collectively referred to as a next-generation radio access network node (NG-RAN node), where the next-generation base station includes a new radio base station (NR NodeB, gNB), a next-generation evolved base station (NG-eNB), a gNB in a form in which a central unit (central unit, CU) and a distributed unit (distributed unit, DU) are split, and the like), a transmission reception point (transmission receive point, TRP), a transmission point (transmission point, TP), or another node.

As shown in FIG. 2, a 5G core/next generation core (5G core/new generation core, 5GC/NGC) network includes a plurality of function units such as an access and mobility management function (Access and Mobility Management Function, AMF) device, a session border controller (Session Border Controller, SBC), a session management function (Session Management Function, SMF) device, a user plane function (User Plane Function, UPF) device, an authentication server function (Authentication Server Function, AUSF) device, a policy control function (Policy Control Function, PCF) device, an application function (Application Function, AF) device, a unified data management function (unified data management, UDM) device, and a network slice selection function (Network Slice Selection Function, NSSF) device.

The AMF device is mainly responsible for services such as mobility management and access management.

The SMF device is mainly responsible for session management, UE address management and assignment, a dynamic host configuration protocol function, selection and control of a user plane function, and the like.

The UPF is mainly responsible for functions related to external connection to a data network (data network, DN), user plane data packet routing and forwarding, packet filtering, quality of service (quality of service, QoS) control, and the like. The AUSF is mainly responsible for a function of authenticating the terminal device.

The PCF device is mainly responsible for providing a unified policy framework for network behavior management, providing a policy rule for a control plane function, obtaining registration information related to a policy decision, and the like. It should be noted that these function units may independently operate, or may be combined to implement some control functions, for example, access control and mobility management functions such as access authentication, security encryption, and location registration of the terminal device, and session management functions such as establishment, release, and change of a user plane transmission path.

Main functions of the AMF device include functions related to access and mobility, such as connection management, mobility management, registration management, access authentication and authorization, reachability management, and security context management.

A main function of the data network (data network, DN) is providing a specific data service, for example, an operator service, Internet access, or a third-party service.

The function units in the 5GC may communicate with each other through a next generation (next generation, NG) network interface. For example, the UE may transmit a control plane message to the AMF device through an NG interface 1 (N1 for short). The RAN device may establish a user plane data transmission channel with the UPF through an NG interface 3 (N3 for short). The AN/RAN device may establish a control plane signaling connection to the AMF device through an NG interface 2 (N2 for short). The UPF may exchange information with the SMF device through an NG interface 4 (N4 for short). The UPF may exchange user plane data with the data network DN through an NG interface 6 (N6 for short). The AMF device may exchange information with the SMF device through an NG interface 11 (N11 for short). The SMF device may exchange information with the PCF device through an NG interface 7 (N7 for short). The AMF device may exchange information with the AUSF through an NG interface 12 (N12 for short).

The foregoing content mainly describes the devices that may be mentioned in this application. It should be understood that the network architecture shown in FIG. 2 is merely used as an example for description, and does not constitute a limitation on a network architecture of a communication system to which this application is applicable. The communication system to which this application is applicable may further include other devices, which are not listed one by one in this application. In addition, a connection form between devices in the communication system to which this application is applicable may be a reference point-based form shown in FIG. 2, or may be a service-oriented interface-based form. In addition, the communication system to which this application is applicable may be further classified into a non-roaming scenario and a roaming scenario. The roaming scenario may be further classified into a local breakout (local breakout) scenario and a home routing (home routed) scenario. Network architectures of the communication system in these communication scenarios may be different, but all of the network architectures are applicable to embodiments of this application.

Currently, a 3GPP R16 protocol standard defines a notification control (Notification Control) mechanism, which is for reporting a notification (Notify) message when the RAN cannot guarantee a guaranteed flow bit rate (Guaranteed Flow Bit Rate, GFBR).

In addition, a packet data unit PDU session modification (Session Modification) procedure is defined in 3GPP TS 23.502.

If Notification Control is set when a flow guaranteed bit rate (Guaranteed Bit Rate, GBR) QoS Flow is delivered, the RAN may send an N2 message to the SMF, to indicate that the RAN cannot meet the QoS Flow GBR or can re-meet the QoS Flow GBR.

In addition, the RAN may carry a candidate QoS Profile that matches a QoS parameter value and that can be currently supported (which is delivered by the PCF during dedicated bearer establishment).

If the PCF subscribes to a Notification event, the SMF reports this event to the PCF for each PCC Rule.

In addition, a procedure of reporting a notification (Notify) message by the RAN is defined in 3GPP TS 38.413, and IE content carried in the reported Notify message is defined in the procedure, and mainly includes a related flow list and a reason for reporting. For example, a QoS flow release list, a QoS flow Notify list, a Notification cause value, and UE location information may be reported.

In a related technology, when an application function device (for example, a session border controller SBC, an application function AF network element, or a proxy call session control function device) receives a Notify message reported by a RAN device, processing may be performed according to a preset local policy, for example, modifying or deleting the GBR QoS flow. For another example, the application function device indicates a PCF device to modify or delete the GBR QoS flow.

Then, according to the solution in the foregoing related technology, a processing manner of the application function device is not targeted, and consequently, accuracy and reliability of a processing result are not high.

After creative efforts, an inventive concept of this application is obtained: An application function device obtains network characteristic information of a radio air interface, and takes an optimization measure in a targeted manner based on the network characteristic information.

By using specific embodiments, the following describes in detail the technical solutions of this application and how to resolve the foregoing technical problem by using the technical solutions of this application. The following several specific embodiments may be combined with each other, and a same or similar concept or process may not be described repeatedly in some embodiments. The following describes embodiments of this application with reference to the accompanying drawings.

According to a first aspect, an embodiment of this application provides a communication method applicable to the foregoing network architecture.

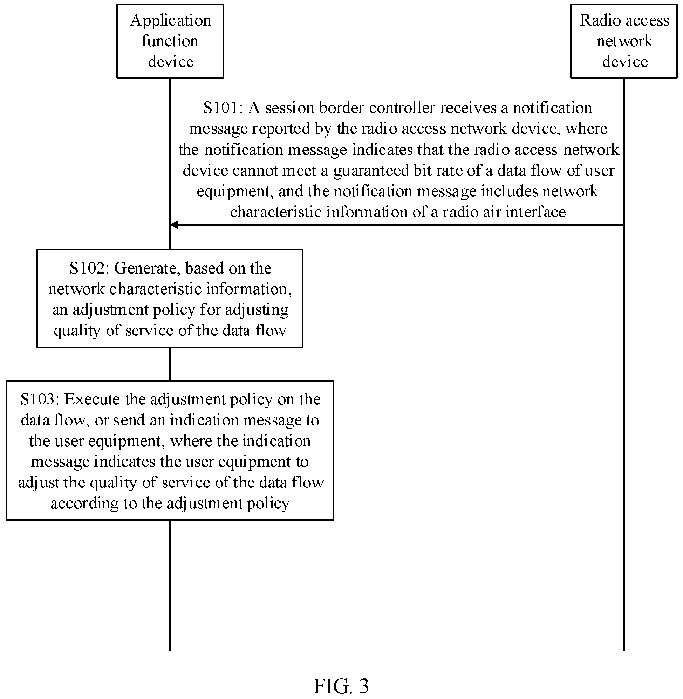

FIG. 3 is a schematic flowchart of a communication method according to an embodiment of this application.

As shown in FIG. 3, the method includes the following steps.

S101: An application function device receives a notification message reported by a radio access network device, where the notification message indicates that the radio access network device cannot meet a guaranteed bit rate of a data flow of user equipment, and the notification message includes network characteristic information of a radio air interface.

The data flow may include a data flow corresponding to a call request and a data flow corresponding to a data request.

If the data flow is a data flow corresponding to a call request, the user equipment may be understood as a device corresponding to a calling user, and the data flow may be understood as a data flow generated when the calling user initiates, by using the user equipment, the call request to a called user through the radio access network device and the application function device in sequence. Certainly, the data flow may alternatively be understood as a data flow fed back by a called user based on the call request of the calling user.

If the data flow is a data flow corresponding to a data request, the data flow may be understood as a data flow generated when the user equipment obtains, through the radio access network device and the application function device in sequence, data provided by each network. Certainly, the data flow may alternatively be understood as a data flow that is obtained by the application function device from each network and that is fed back to the user equipment.

The guaranteed bit rate is a parameter in quality of service (Quality of Service, QoS), and may represent a bit rate that can be guaranteed to be provided by a radio air interface bearer.

For example, in this embodiment, the user equipment and a radio access network are connected to each other through a radio air interface (Air Interface). The radio air interface is an air interface in which the radio access network device is located, and the radio air interface may be understood as a wireless transmission specification between the radio access network device and the user equipment, and may define a used frequency, bandwidth, an access occasion, an encoding method, an inter-cell handover, and the like of each radio channel.

The network characteristic information may be understood as quality parameter information and/or network event information for the radio air interface to transmit the data flow to the radio access network device according to the wireless transmission specification.

For example, the quality parameter information may be understood as information related to transmission signal quality (that is, signal quality parameter information) for the radio air interface to transmit the data flow, and/or information related to transmission channel quality (that is, channel quality parameter information) for the radio air interface to transmit the data flow.

The network event information may be understood as information that indicates that a network of the radio air interface cannot meet a preset network requirement for data flow transmission, for example, high-load event information, to be specific, information that indicates that the network of the radio air interface cannot meet a load requirement for data flow transmission; high-interference event information, to be specific, information that indicates that the network of the radio air interface cannot meet an interference requirement for data flow transmission; and weak coverage event information, to be specific, information that indicates that the network of the radio air interface cannot meet a coverage requirement for data flow transmission. Other examples are not enumerated one by one herein.

It can be learned from the foregoing analysis that, in the related technology, when the radio access network device cannot meet the guaranteed bit rate of the data flow of the user equipment, the radio access network device may send the notification message to the application function device. However, in this embodiment of this application, the network characteristic information is introduced into the notification message, so that the application function device can determine, based on the network characteristic information, a reason why the radio access network device cannot meet the guaranteed bit rate, and the application function device subsequently generates an adjustment policy for adjusting the quality of service of the data flow in a targeted manner. In this way, reliability and accuracy of adjustment on the quality of service of the data flow are implemented.

S102: The application function device generates, based on the network characteristic information, the adjustment policy for adjusting the quality of service of the data flow.

S103: The application function device executes the adjustment policy on the data flow, or sends an indication message to the user equipment, where the indication message indicates the user equipment to adjust the quality of service of the data flow according to the adjustment policy.

In other words, in this embodiment, the application function device may execute the adjustment policy, to adjust the quality of service of the data flow; or the application function device may send the indication message to the user equipment, so that the user equipment executes the adjustment policy, in other words, the user equipment adjusts the quality of service of the data flow.

In some embodiments, the application function device may further receive and send an adjusted data flow.

For example, the application function device sends the adjusted data flow to the radio access network device, or the application function device receives a data flow that is sent by the user equipment through the radio access network device and that is adjusted by the user equipment.

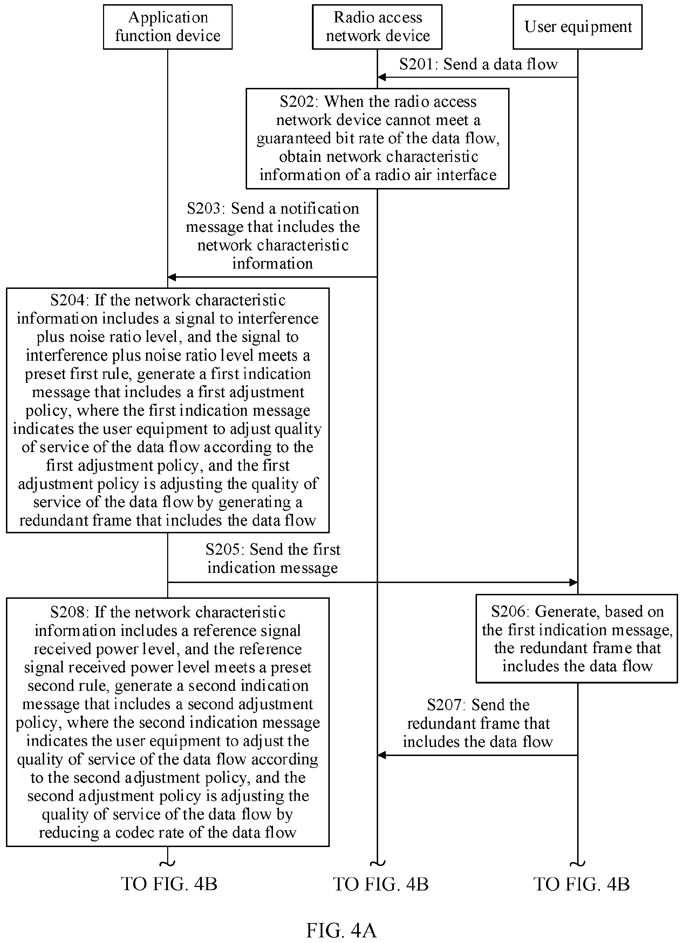

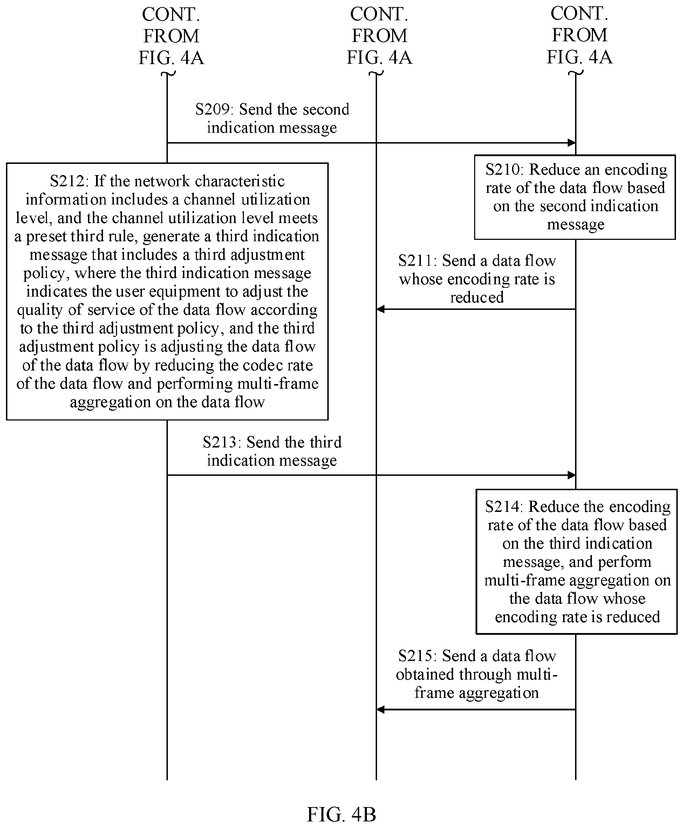

To enable a reader to better understand the solutions in embodiments of this application, the communication method in embodiments of this application is described in detail by using an example in which user equipment executes an adjustment policy. FIG. 4A and FIG. 4B are a schematic flowchart of a communication method according to another embodiment of this application.

As shown in FIG. 4A and FIG. 4B, the method includes the following steps.

S201: User equipment sends a data flow to a radio access network device.

Correspondingly, the radio access network device receives the data flow sent by the user equipment.

For descriptions of the data flow, refer to the foregoing examples. Details are not described herein again.

S202: When the radio access network device cannot meet a guaranteed bit rate (Guaranteed Bit Rate, GBR) of the data flow, the radio access network device obtains network characteristic information of a radio air interface.

For descriptions of the guaranteed bit rate and the radio air interface, refer to the foregoing examples. Details are not described herein again.

In addition, it can be learned from the foregoing analysis that, the network characteristic information may be understood as information related to transmission signal quality (that is, signal quality parameter information) for the radio air interface to transmit the data flow to the radio access network device according to a wireless transmission specification, and/or information related to transmission channel quality (that is, channel quality parameter information) for the radio air interface to transmit the data flow. In this embodiment, an example in which the network characteristic information includes the signal quality parameter information and the channel quality parameter information is used to describe the communication method.

In other words, the network characteristic information may be understood from a dimension of signal quality during data flow transmission, or may be understood from a dimension of quality of a channel for data flow transmission during data flow transmission. When the network characteristic information is obtained with reference to dimensions of signal quality and channel quality, comprehensiveness and reliability of the obtained network characteristic information can be improved.

The signal quality parameter information is described as follows.

In a possible implementation solution, the signal quality parameter information may include information related to a signal to interference plus noise ratio (Signal to Interference plus Noise Ratio, SINR), for example, the signal to interference plus noise ratio, or a signal to interference plus noise ratio level.

The information related to the signal to interference plus noise ratio may be understood as a situation in which a signal is interfered. In this embodiment, the information related to the signal to interference plus noise ratio may be understood as a degree of interference caused by another signal to a signal of the data flow in a process in which the user equipment transmits the data flow to the radio access network device through the radio air interface, and may be expressed by a signal to interference plus noise ratio, or may be expressed by a signal to interference plus noise ratio level.

When the information related to the signal to interference plus noise ratio is expressed by the signal to interference plus noise ratio level, a mapping relationship between the signal to interference plus noise ratio and the level may be set by the radio access network device or the air interface. When the signal to interference plus noise ratio is determined, the level corresponding to the signal to interference plus noise ratio can be determined based on the mapping relationship. For example, a larger signal to interference plus noise ratio indicates a higher level corresponding to the signal to interference plus noise ratio. For another example, a larger signal to interference plus noise ratio indicates a lower level corresponding to the signal to interference plus noise ratio.

In another possible implementation solution, the signal quality parameter information may include information related to reference signal received power (Reference Signal Received Power, RSRP), for example, the reference signal received power, or a reference signal received power level.

The reference signal received power may be understood as an average value of received signal power. In this embodiment, the reference signal received power may be understood as an average value of signal power of the data flow received by the radio air interface in a process in which the user equipment transmits the data flow to the radio access network device through the radio air interface, and the information related to the reference signal received power may be expressed by reference signal received power, or may be expressed by a reference signal received power level.

Similarly, when the information related to the reference signal received power is expressed by the reference signal received power level, a mapping relationship between the reference signal received power and the level may be set by the radio access network device or the air interface. When the reference signal received power is determined, the level corresponding to the reference signal received power can be determined based on the mapping relationship. For example, higher reference signal received power indicates a higher level corresponding to the reference signal received power. For another example, higher reference signal received power indicates a lower level corresponding to the reference signal received power.

The channel quality parameter information is described as follows.

The channel quality parameter information may include information related to channel quality, for example, a channel utilization, or a channel utilization level.

Similarly, when the channel quality parameter information includes the channel utilization level, a mapping relationship between the channel utilization and the level may be set by the radio access network device or the air interface. When the channel utilization is determined, the level corresponding to the channel utilization can be determined based on the mapping relationship. For example, a higher channel utilization indicates a higher level corresponding to the channel utilization. For another example, a higher channel utilization indicates a lower level corresponding to the channel utilization.

The channel utilization level includes at least one of: a physical downlink control channel (Physical Downlink Control Channel, PDCCH) utilization level, a physical downlink shared channel (Physical Downlink Shared Channel, PDSCH) utilization level, a physical uplink shared channel (Physical Uplink Shared Channel, PUSCH) utilization level, and a channel utilization comprehensive level.

The channel utilization comprehensive level may be understood as a level corresponding to a combination of utilizations of all channels. For example, a comprehensive utilization of utilizations of all channels may be calculated, and a mapping relationship between the comprehensive utilization and the level is set; or a weight coefficient of each channel may be set, and the channel utilization comprehensive level is determined based on utilizations of all channels and weight information corresponding to each channel.

S203: The radio access network device sends a notification message that includes the network characteristic information to an application function device.

Correspondingly, the application function device receives the notification message that includes the network characteristic information and that is sent by the radio access network device.

It should be noted that, if the network characteristic information is expressed by the signal to interference plus noise ratio level, the reference signal received power level, and the channel utilization level, a security problem caused by parameter value leakage that is caused when the radio access network device sends a specific parameter value (for example, a signal to interference plus noise ratio, reference signal received power, and a channel utilization) to the application function device can be avoided. This implements data transmission security.

S204: If the network characteristic information includes the signal to interference plus noise ratio level, and the signal to interference plus noise ratio level meets a preset first rule, the application function device generates a first indication message that includes a first adjustment policy, where the first indication message indicates the user equipment to adjust quality of service of the data flow according to the first adjustment policy, and the first adjustment policy is adjusting the quality of service of the data flow by generating a redundant frame (Redundancy Data, RED) that includes the data flow.

The first rule includes that the signal to interference plus noise ratio level is greater than a preset first threshold, or the signal to interference plus noise ratio level is less than the first threshold.

It can be learned from the foregoing analysis that, in some embodiments, a larger signal to interference plus noise ratio indicates a higher level corresponding to the signal to interference plus noise ratio, and correspondingly, the first rule includes that the signal to interference plus noise ratio level is greater than the preset first threshold; but in some other embodiments, a larger signal to interference plus noise ratio indicates a lower level corresponding to the signal to interference plus noise ratio, and correspondingly, the first rule may be that the signal to interference plus noise ratio level is less than the preset first threshold.

In this embodiment, an example in which the first rule is that the signal to interference plus noise ratio level is greater than the first threshold is used for example description. An implementation principle of this application used when the first rule is that the signal to interference plus noise ratio level is less than the first threshold is similar to this. Details are not described herein again.

The first threshold may be set by the application function device based on a requirement, a history record, an experiment, and the like. This is not limited in this embodiment.

For example, an example in which the application function device sets the first threshold based on the history record is used for the following description.

The history record may be for reflecting a mapping relationship between the signal to interference plus noise ratio level and the quality of service of the data flow. When the signal to interference plus noise ratio level is determined as a value based on the history record, the quality of service of the data flow is low and cannot meet a requirement of a call request, for example, cannot meet call quality. In this case, the value is set to the first threshold.

Correspondingly, this step may specifically include: The application function device determines whether the network characteristic information includes the signal to interference plus noise ratio level; and if yes (to be specific, the network characteristic information includes the signal to interference plus noise ratio level), the application function device determines whether the signal to interference plus noise ratio level is greater than the first threshold; and if yes (to be specific, the signal to interference plus noise ratio level is greater than the first threshold), the application function device generates the first indication message that includes the first adjustment policy. If the network characteristic information does not include the signal to interference plus noise ratio level, or the signal to interference plus noise ratio level is less than the first threshold, the application function device may perform S208.

S205: The application function device sends the first indication message to the user equipment.

Correspondingly, the user equipment receives the first indication message sent by the application function device.

S206: The user equipment generates, based on the first indication message, the redundant frame that includes the data flow.

S207: The user equipment sends the redundant frame that includes the data flow to the radio access network device.

Correspondingly, the radio access network device receives the redundant frame that includes the data flow and that is sent by the user equipment.

In other words, after receiving the first indication message sent by the application function device, the user equipment may generate a plurality of data frames that include the data flow, to avoid problems such as packet loss and blocking of the data flow caused by that the data flow is interfered by another signal when the user equipment sends the data flow to the radio access network device. This implements reliability and stability of data flow transmission.

It should be understood that, after receiving the redundant frame that includes the data flow and that is sent by the user equipment, a radio access network may send the redundant frame that includes the data flow to the application function device, and the application function device may send the redundant frame that includes the data flow to a corresponding network, to complete a call service corresponding to a call request or complete a data service corresponding to a data request.

S208: If the network characteristic information includes the reference signal received power level, and the reference signal received power level meets a preset second rule, the application function device generates a second indication message that includes a second adjustment policy, where the second indication message indicates the user equipment to adjust the quality of service of the data flow according to the second adjustment policy, and the second adjustment policy is adjusting the quality of service of the data flow by reducing a codec rate (codec rate, MR) of the data flow.

The second rule includes that the reference signal received power level is greater than a preset second threshold, or the reference signal received power level is less than the second threshold.

It can be learned from the foregoing analysis that, in some embodiments, higher reference signal received power indicates a higher level corresponding to the reference signal received power, and correspondingly, the second rule includes that the reference signal received power level is less than the second threshold; but in some other embodiments, higher reference signal received power indicates a lower level corresponding to the reference signal received power, and correspondingly, the second rule may be that the reference signal received power level is greater than the second threshold.

Similarly, in this embodiment, an example in which the second rule is that the reference signal received power level is less than the second threshold is used for example description. An implementation principle of this application when the second rule is that the reference signal received power level is greater than the second threshold is similar to this. Details are not described herein again.

Similarly, the second threshold may be set by the application function device based on a requirement, a history record, an experiment, and the like. This is not limited in this embodiment. For a principle of setting the second threshold by the application function device, refer to descriptions of setting the first threshold by the application function device. Details are not described herein again.

Correspondingly, this step may specifically include: The application function device determines whether the network characteristic information includes the reference signal received power level; and if yes (to be specific, the network characteristic information includes the reference signal received power level), the application function device determines whether the reference signal received power level is greater than the second threshold; and if yes (to be specific, the reference signal received power level is greater than the second threshold), the application function device generates the second indication message that includes the second adjustment policy. If the network characteristic information does not include the reference signal received power level, or the reference signal received power level is less than the second threshold, the application function device may perform S212.

S209: The application function device sends the second indication message to the user equipment.

Correspondingly, the user equipment receives the second indication message sent by the application function device.

S210: The user equipment reduces an encoding rate of the data flow based on the second indication message.

S211: The user equipment sends a data flow whose encoding rate is reduced to the radio access network device.

Correspondingly, the radio access network device receives the data flow whose encoding rate is reduced and that is sent by the user equipment.

It should be noted that the encoding rate may be understood as a rate of encoding the data flow by the user equipment. Different encoding rates cause different gains when the user equipment transmits the data flow, to be specific, different encoding rates cause different coverage areas for data flow transmission of the user equipment. In this embodiment, the user equipment reduces the encoding rate of the data flow, so that a coverage area of data flow transmission of the user equipment can be increased. This improves reliability of data flow transmission.

Similarly, after receiving the data flow whose encoding rate is reduced and that is sent by the user equipment, the radio access network may send the data flow whose encoding rate is reduced to the application function device, and the application function device may send the data flow whose encoding rate is reduced to a corresponding network, to complete a call service corresponding to a call request or complete a data service corresponding to a data request.

S212: If the network characteristic information includes the channel utilization level, and the channel utilization level meets a preset third rule, the application function device generates a third indication message that includes a third adjustment policy, where the third indication message indicates the user equipment to adjust the quality of service of the data flow according to the third adjustment policy, and the third adjustment policy is adjusting the quality of service of the data flow by reducing the codec rate of the data flow and performing multi-frame aggregation (Frame Aggregation, AGG) on the data flow.

The third rule includes that the channel utilization level is greater than a preset third threshold, or the channel utilization level is less than the third threshold.

It can be learned from the foregoing analysis that, in some embodiments, a higher channel utilization indicates a higher level corresponding to the channel utilization, and correspondingly, the third rule includes that the channel utilization level is greater than the third threshold; but in some other embodiments, a higher channel utilization indicates a lower level corresponding to the channel utilization, and correspondingly, the third rule may be that the channel utilization level is less than the third threshold.

Similarly, in this embodiment, an example in which the third rule is that the channel utilization level is greater than the third threshold is used for example description. An implementation principle of this application when the third rule is that the channel utilization level is less than the third threshold is similar to this. Details are not described herein again.

Similarly, the third threshold may be set by the application function device based on a requirement, a history record, an experiment, and the like. This is not limited in this embodiment. For a principle of setting the third threshold by the application function device, refer to descriptions of setting the first threshold by the application function device. Details are not described herein again.

Correspondingly, this step may specifically include: The application function device determines whether the network characteristic information includes the channel utilization level; and if yes (to be specific, the network characteristic information includes the channel utilization level), the application function device determines whether the channel utilization level is greater than the third threshold; and if yes (to be specific, the channel utilization level is greater than the third threshold), the application function device generates the third indication message that includes the third adjustment policy.

S213: The application function device sends the third indication message to the user equipment.

Correspondingly, the user equipment receives the third indication message sent by the application function device.

S214: The user equipment reduces the encoding rate of the data flow based on the third indication message, and performs multi-frame aggregation on the data flow whose encoding rate is reduced.

S215: The user equipment sends, to the radio access network device, a data flow obtained through multi-frame aggregation.

Correspondingly, the radio access network device receives the data flow that is obtained through multi-frame aggregation and that is sent by the user equipment.

For descriptions of reducing the encoding rate of the data flow, refer to the foregoing descriptions. Details are not described herein again.

It should be noted that, multi-frame aggregation may be understood as aggregating multi-frame data that includes the data flow into one data packet, so that frequency for transmitting, by the user equipment, the data packet that includes the data flow to the radio access network device can be reduced, to achieve a technical effect of saving interaction resources (for example, broadband).

Similarly, after receiving the data flow that is obtained through multi-frame aggregation and that is sent by the user equipment, the radio access network may send the data flow obtained through multi-frame aggregation to the application function device, and the application function device may send the data flow obtained through multi-frame aggregation to a corresponding network, to complete a call service corresponding to a call request or complete a data service corresponding to a data request.

It can be learned from the foregoing analysis that, in some embodiments, when the application function device receives the notification message that is sent by the radio access network device and that includes the network characteristic information, the application function device generates, based on specific content (for example, the signal quality parameter information and the channel quality parameter information) of the network characteristic information, an indication message that includes a corresponding adjustment policy (for example, the first indication message that includes the first adjustment policy, the second indication message that includes the second adjustment policy, and the third indication message that includes the third adjustment policy), and sends the indication message to the user equipment. The user equipment executes the adjustment policy carried in the indication message, to implement targeted adjustment on the quality of service of the data flow, implement flexibility of adjusting the quality of service of the data flow, and implement accuracy and reliability of data transmission.

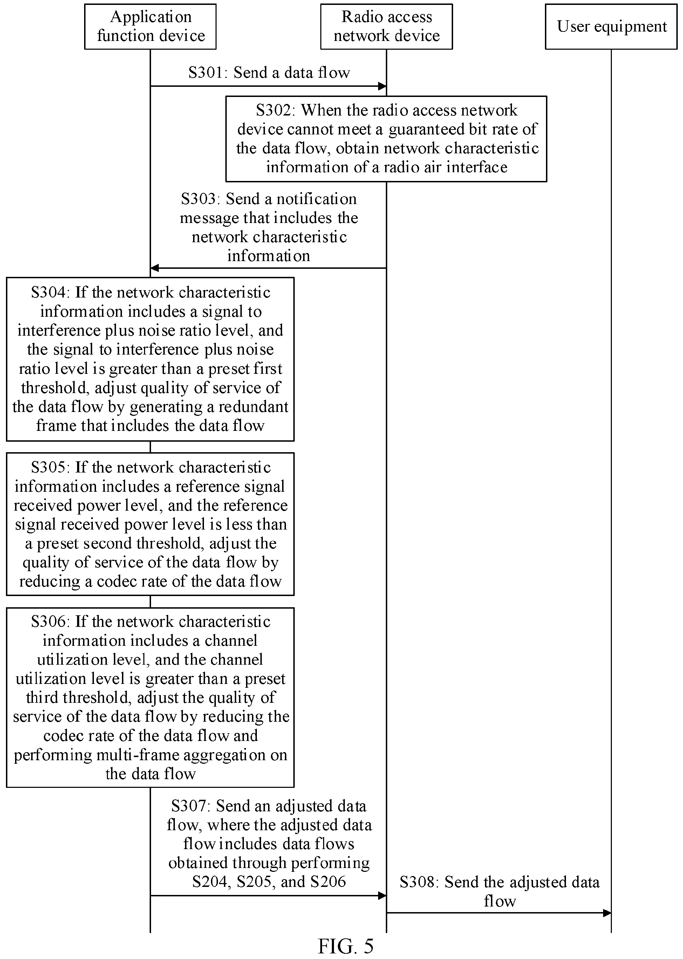

In some other embodiments, the application function device may adjust the quality of service of the data flow. Details are described with reference to FIG. 5.

As shown in FIG. 5, the method includes the following steps.

S301: An application function device sends a data flow to a radio access network device.

In the foregoing embodiment, the data flow may be understood as uplink data. In this embodiment, the data flow may be understood as downlink data. For example, the data flow is a data flow for the application function device to feed back a data request of user equipment corresponding to a calling user. For another example, the data flow is a data flow for the application function device to feed back a call request of the user equipment (for example, a data flow feeding back to a call request initiated by a called user via a user equipment).

S302: When the radio access network device cannot meet a guaranteed bit rate of the data flow, the radio access network device obtains network characteristic information of a radio air interface.

For descriptions of S302, refer to S202. Details are not described herein again.

S303: The radio access network device sends a notification message that includes the network characteristic information to the application function device.

Correspondingly, the application function device receives the notification message that includes the network characteristic information and that is sent by the radio access network device.

Similarly, for descriptions of S303, refer to S203. Details are not described herein again.

S304: If the network characteristic information includes a signal to interference plus noise ratio level, and the signal to interference plus noise ratio level is greater than a preset first threshold, the application function device adjusts quality of service of the data flow by generating a redundant frame that includes the data flow.

For a principle of setting the first threshold by the application function device, refer to the principle of setting the first threshold by the application function device in the foregoing embodiment. For a principle of adjusting, by the application function device, the quality of service of the data flow by generating the redundant frame that includes the data flow, refer to the principle of adjusting the quality of service of the data flow by the user equipment based on the first indication message in the foregoing embodiment. Details are not described herein again.

It should be noted that, this step may specifically include: The application function device determines whether the network characteristic information includes the signal to interference plus noise ratio level; and if yes (to be specific, the network characteristic information includes the signal to interference plus noise ratio level), the application function device determines whether the signal to interference plus noise ratio level is greater than the first threshold; and if yes (to be specific, the signal to interference plus noise ratio level is greater than the first threshold), the application function device adjusts the quality of service of the data flow by generating the redundant frame that includes the data flow.

If the network characteristic information does not include the signal to interference plus noise ratio level, or the signal to interference plus noise ratio level is less than the first threshold, the application function device may send the data flow to the radio access network device. Correspondingly, the radio access network device receives the data flow sent by the application function device, and the radio access network device sends the data flow to the user equipment. Correspondingly, the user equipment receives the data flow sent by the radio access network device. Alternatively, the application function device may perform S305.

S305: If the network characteristic information includes a reference signal received power level, and the reference signal received power level is less than a preset second threshold, the application function device adjusts the quality of service of the data flow by reducing a codec rate of the data flow.

Similarly, for a principle of setting the second threshold by the application function device, refer to the principle of setting the first threshold by the application function device in the foregoing embodiment. For a principle of adjusting, by the application function device, the quality of service of the data flow by reducing the codec rate of the data flow, refer to the principle of adjusting the quality of service of the data flow by the user equipment based on the second indication message in the foregoing embodiment. Details are not described herein again.

It should be noted that, this step may specifically include: The application function device determines whether the network characteristic information includes the reference signal received power level; and if yes (to be specific, the network characteristic information includes the reference signal received power level), the application function device determines whether the reference signal received power level is greater than the second threshold; and if yes (to be specific, the reference signal received power level is greater than the second threshold), the application function device adjusts the quality of service of the data flow by reducing the codec rate of the data flow.

If the network characteristic information does not include the reference signal received power level, or the reference signal received power level is less than the second threshold, the application function device may send the data flow to the radio access network device. Correspondingly, the radio access network device receives the data flow sent by the application function device, and the radio access network device sends the data flow to the user equipment. Correspondingly, the user equipment receives the data flow sent by the radio access network device. Alternatively, the application function device may perform S306.

S306: If the network characteristic information includes a channel utilization level, and the channel utilization level is greater than a preset third threshold, the application function device adjusts the quality of service of the data flow by reducing the codec rate of the data flow and performing multi-frame aggregation on the data flow.

Similarly, for a principle of setting the third threshold by the application function device, refer to the principle of setting the first threshold by the application function device in the foregoing embodiment. For a principle of adjusting, by the application function device, the quality of service of the data flow by reducing the codec rate of the data flow and performing multi-frame aggregation on the data flow, refer to the principle of adjusting the quality of service of the data flow by the user equipment based on the third indication message in the foregoing embodiment. Details are not described herein again.

It should be noted that, this step may specifically include: The application function device determines whether the network characteristic information includes the channel utilization level; and if yes (to be specific, the network characteristic information includes the channel utilization level), the application function device determines whether the channel utilization level is greater than the third threshold; and if yes (to be specific, the channel utilization level is greater than the third threshold), the application function device adjusts the quality of service of the data flow by reducing the codec rate of the data flow and performing multi-frame aggregation on the data flow.

If the network characteristic information does not include the channel utilization level, or the channel utilization level is less than the third threshold, the application function device may send the data flow to the radio access network device. Correspondingly, the radio access network device receives the data flow sent by the application function device, and the radio access network device sends the data flow to the user equipment. Correspondingly, the user equipment receives the data flow sent by the radio access network device.

S307: The application function device sends an adjusted data flow to the radio access network device. The adjusted data flow includes data flows obtained through S304, S305, and S306.

Correspondingly, the radio access network device receives the adjusted data flow sent by the application function device.

S308: The radio access network device sends the adjusted data flow to the user equipment.

Correspondingly, the user equipment receives the adjusted data flow sent by the radio access network device.

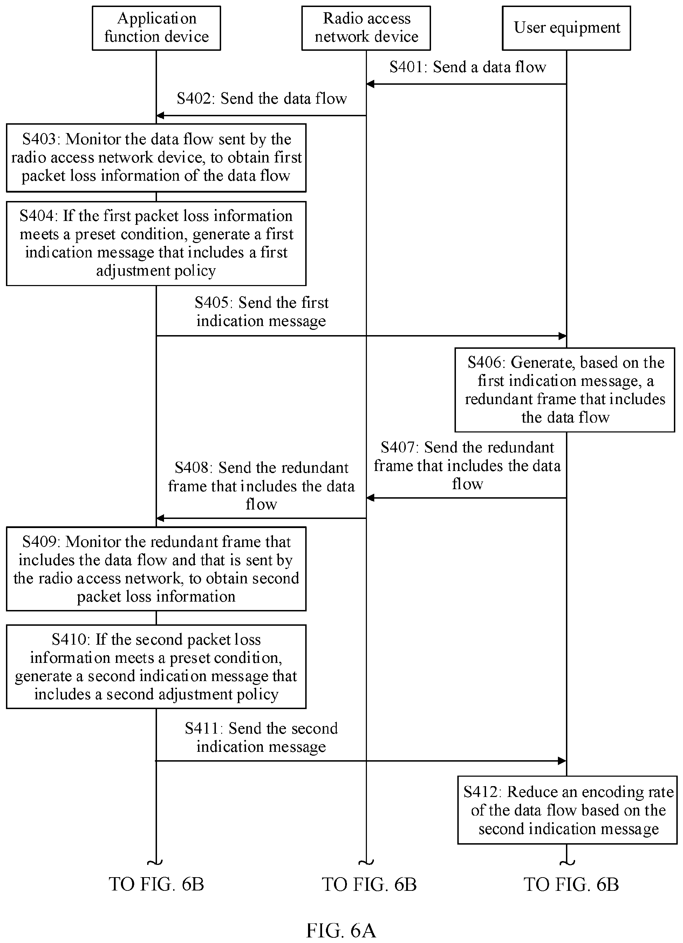

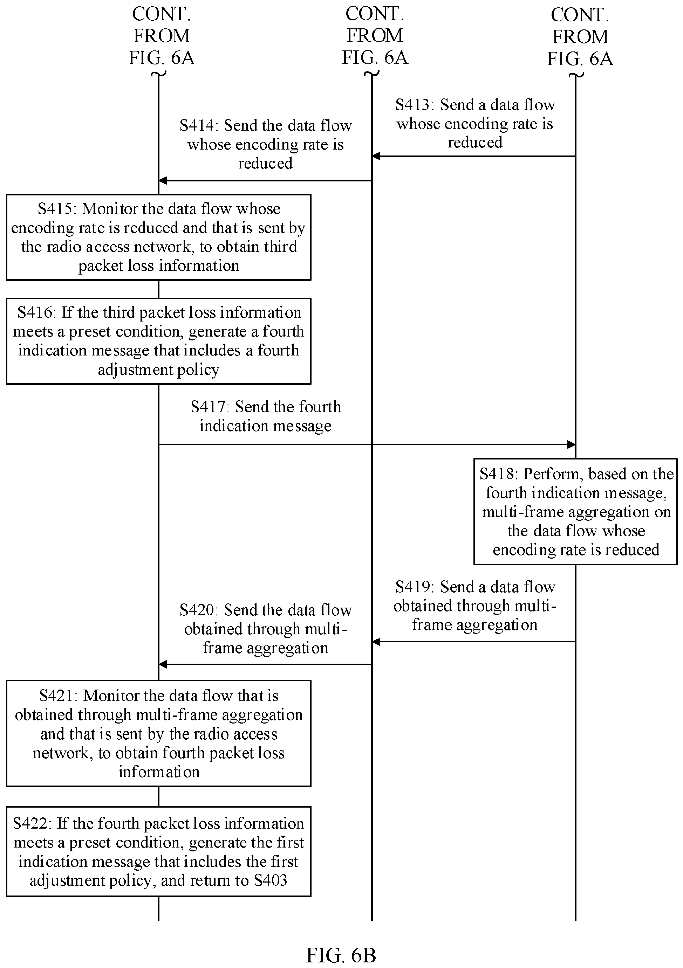

It can be learned from embodiments shown in FIG. 4A and FIG. 4B and FIG. 5 that, when the radio access network device cannot meet the guaranteed bit rate of the data flow of the user equipment, the radio access network device may generate and send the notification message that includes the network characteristic information of the radio air interface to the application function device, and the application function device may generate, based on the network characteristic information, the adjustment policy for adjusting the quality of service of the data flow (for example, in the foregoing embodiment, generating and sending the redundant frame that includes the data flow, reducing the encoding rate of the data flow, and performing multi-frame aggregation on the data flow). In addition, the application function device may execute the adjustment policy on the data flow (as the embodiment shown in FIG. 5), or the application function device may indicate, by using the indication message, the user equipment to execute the adjustment policy on the data flow (as the embodiment shown in FIG. 4A and FIG. 4B). In some other embodiments, the application function device may monitor the data flow sent by the user equipment by using the radio access network device, and indicate, based on obtained monitoring information, the user equipment to adjust the quality of service of the data flow. Details are described with reference to FIG. 6A and FIG. 6B.

FIG. 6A and FIG. 6B are a schematic flowchart of a communication method according to another embodiment of this application.

As shown in FIG. 6A and FIG. 6B, the method includes the following steps.

S401: User equipment sends a data flow to a radio access network device.

Correspondingly, the radio access network device receives the data flow sent by the user equipment.

For descriptions of S401, refer to S301. Details are not described herein again.

S402: The radio access network device sends the data flow to an application function device.

Correspondingly, the application function device receives the data flow sent by the radio access network device.

S403: The application function device monitors the data flow sent by the radio access network device, to obtain first packet loss information of the data flow.

The first packet loss information includes a first packet loss rate and/or a first quantity of continuously lost frames.

S404: If the first packet loss information meets a preset condition, the application function device generates a first indication message that includes a first adjustment policy.

The preset condition includes: the first packet loss rate reaches a preset fourth threshold and/or the first quantity of continuously lost frames is greater than a preset frame quantity threshold.

In a possible implementation solution, this step may include: The application function device determines whether the first packet loss rate reaches the fourth threshold, and if the first packet loss rate reaches the fourth threshold, the application function device generates the first indication message.

In another possible implementation solution, this step may include: The application function device determines whether the first quantity of continuously lost frames is greater than the frame quantity threshold, and if the first quantity of continuously lost frames is greater than the frame quantity threshold, the application function device generates the first indication message.

In another possible implementation solution, this step may include: The application function device determines whether the first packet loss rate reaches the fourth threshold; and if yes (to be specific, the first packet loss rate reaches the fourth threshold), the application function device determines whether the first quantity of continuously lost frames is greater than the frame quantity threshold; and if yes (to be specific, the first quantity of continuously lost frames is greater than the frame quantity threshold), the application function device generates the first indication message.

It should be noted that, for descriptions of the first adjustment policy and the first indication message, refer to the foregoing embodiment (for example, the embodiment shown in FIG. 4A and FIG. 4B). Details are not described herein again. In addition, for a principle of setting the fourth threshold and the frame quantity threshold, refer to the principle of setting the first threshold by the application function device in the foregoing embodiment. Details are not described herein again.

S405: The application function device sends the first indication message to the user equipment.

Correspondingly, the user equipment receives the first indication message sent by the application function device.

S406: The user equipment generates, based on the first indication message, a redundant frame that includes the data flow.

S407: The user equipment sends the redundant frame that includes the data flow to the radio access network device.

Correspondingly, the radio access network device receives the redundant frame that includes the data flow and that is sent by the user equipment.

Correspondingly, for descriptions of S405 to S407, refer to S205 to S207. Details are not described herein again.

S408: The radio access network device sends the redundant frame that includes the data flow to the application function device.

Correspondingly, the application function device receives the redundant frame that includes the data flow and that is sent by the radio access network device.

S409: The application function device monitors the redundant frame that includes the data flow and that is sent by the radio access network device, to obtain second packet loss information.

In other words, the user equipment may generate, based on the first indication message, the redundant frame that includes the data flow, and send the redundant frame that includes the data flow to the application function device by using the radio access network device, and the application function device still monitors packet loss information of the data flow to obtain the second packet loss information.

Similarly, the second packet loss information includes a second packet loss rate and/or a second quantity of continuously lost frames.

S410: If the second packet loss information meets a preset condition, the application function device generates a second indication message that includes a second adjustment policy.

Similarly, the preset condition includes: the second packet loss rate reaches the preset fourth threshold and/or the second quantity of continuously lost frames is greater than the preset frame quantity threshold.

In a possible implementation solution, the application function device determines whether the second packet loss rate reaches the fourth threshold, and if the second packet loss rate reaches the fourth threshold, the application function device generates the second indication message.

In another possible implementation solution, the application function device determines whether the second quantity of continuously lost frames is greater than the frame quantity threshold, and if the second quantity of continuously lost frames is greater than the frame quantity threshold, the application function device generates the second indication message.

In another possible implementation solution, this step may include: The application function device determines whether the second packet loss rate reaches the fourth threshold; and if yes (to be specific, the second packet loss rate reaches the fourth threshold), the application function device determines whether the second quantity of continuously lost frames is greater than the frame quantity threshold; and if yes (to be specific, the second quantity of continuously lost frames is greater than the frame quantity threshold), the application function device generates the second indication message.

It should be noted that, if the application function device determines that the second packet loss rate is less than the fourth threshold and/or the second quantity of continuously lost frames is less than the frame quantity threshold, the application function device may send, to the user equipment, an indication message that indicates the user equipment to resume normal data flow transmission. Correspondingly, the user equipment receives the indication message that is sent by the application function device and that indicates the user equipment to resume normal data flow transmission, and the user equipment sends the data flow to the radio access network device, and does not send the redundant frame that includes the data flow.

In addition, for descriptions of the second adjustment policy and the second indication message, refer to the foregoing embodiment (for example, the embodiment shown in FIG. 4A and FIG. 4B). Details are not described herein again.

S411: The application function device sends the second indication message to the user equipment.

Correspondingly, the user equipment receives the second indication message sent by the application function device.

S412: The user equipment reduces an encoding rate of the data flow based on the second indication message.

S413: The user equipment sends a data flow whose encoding rate is reduced to the radio access network device.

Correspondingly, the radio access network device receives the data flow whose encoding rate is reduced and that is sent by the user equipment.

Correspondingly, for descriptions of S411 to S413, refer to S209 to S211. Details are not described herein again.

S414: The radio access network device sends the data flow whose encoding rate is reduced to the application function device.

Correspondingly, the application function device receives the data flow whose encoding rate is reduced and that is sent by the radio access network device.

S415: The application function device monitors the data flow whose encoding rate is reduced and that is sent by the radio access network device, to obtain third packet loss information.

In other words, the user equipment may reduce the encoding rate of the data flow based on the second indication message, and send the data flow whose encoding rate is reduced to the application function device by using the radio access network device, and the application function device still monitors packet loss information of the data flow to obtain the third packet loss information.

Similarly, the third packet loss information includes a third packet loss rate and/or a third quantity of continuously lost frames.

S416: If the third packet loss information meets a preset condition, the application function device generates a fourth indication message that includes a fourth adjustment policy.

Similarly, the preset condition includes: the third packet loss rate reaches the preset fourth threshold and/or the third quantity of continuously lost frames is greater than the preset frame quantity threshold.

In a possible implementation solution, the application function device determines whether the third packet loss rate reaches the fourth threshold, and if the third packet loss rate reaches the fourth threshold, the application function device generates the fourth indication message.

In another possible implementation solution, the application function device determines whether the third quantity of continuously lost frames is greater than the frame quantity threshold, and if the third quantity of continuously lost frames is greater than the frame quantity threshold, the application function device generates the fourth indication message.

In another possible implementation solution, this step may include: The application function device determines whether the third packet loss rate reaches the fourth threshold; and if yes (to be specific, the third packet loss rate reaches the fourth threshold), the application function device determines whether the third quantity of continuously lost frames is greater than the frame quantity threshold; and if yes (to be specific, the third quantity of continuously lost frames is greater than the frame quantity threshold), the application function device generates a third indication message.

It should be noted that, if the application function device determines that the third packet loss rate is less than the fourth threshold and/or the third quantity of continuously lost frames is less than the frame quantity threshold, the application function device may send, to the user equipment, an indication message that indicates the user equipment to resume normal data flow transmission. Correspondingly, the user equipment receives the indication message that is sent by the application function device and that indicates the user equipment to resume normal data flow transmission, and the user equipment sends the data flow to the radio access network device, and does not reduce the encoding rate of the data flow, in other words, the data flow is encoded by using a configured encoding rate (to be specific, the encoding rate is restored to an encoding rate before the encoding rate is reduced).

The fourth adjustment policy is adjusting quality of the data flow by multi-frame aggregation. For descriptions of multi-frame aggregation, refer to the foregoing embodiment. Details are not described herein again.

S417: The application function device sends the fourth indication message to the user equipment.

Correspondingly, the user equipment receives the fourth indication message sent by the application function device.

S418: The user equipment performs, based on the fourth indication message, multi-frame aggregation on the data flow whose encoding rate is reduced.

S419: The user equipment sends, to the radio access network device, a data flow obtained through multi-frame aggregation.

S420: The radio access network device sends the data flow obtained through multi-frame aggregation to the application function device.

S421: The application function device monitors the data flow that is obtained through multi-frame aggregation and that is sent by the radio access network, to obtain fourth packet loss information.

In other words, the user equipment may generate, based on the fourth indication message, the data flow obtained through multi-frame aggregation, and send the data flow obtained through multi-frame aggregation to the application function device by using the radio access network device, and the application function device still monitors packet loss information of the data flow to obtain the fourth packet loss information.

Similarly, the fourth packet loss information includes a fourth packet loss rate and/or a fourth quantity of continuously lost frames.

S422: If the fourth packet loss information meets a preset condition, the application function device generates the first indication message that includes the first adjustment policy, and returns to S403.

Similarly, the preset condition includes: the fourth packet loss rate reaches the preset fourth threshold and/or the fourth quantity of continuously lost frames is greater than the preset frame quantity threshold.

In a possible implementation solution, the application function device determines whether the fourth packet loss rate reaches the fourth threshold, and if the fourth packet loss rate reaches the fourth threshold, the application function device generates the first indication message.

In another possible implementation solution, the application function device determines whether the fourth quantity of continuously lost frames is greater than the frame quantity threshold, and if the fourth quantity of continuously lost frames is greater than the frame quantity threshold, the application function device generates the first indication message.

In another possible implementation solution, this step may include: The application function device determines whether the fourth packet loss rate reaches the fourth threshold; and if yes (to be specific, the fourth packet loss rate reaches the fourth threshold), the application function device determines whether the fourth quantity of continuously lost frames is greater than the frame quantity threshold; and if yes (to be specific, the fourth quantity of continuously lost frames is greater than the frame quantity threshold), the application function device generates the first indication message.

It should be noted that, if the application function device determines that the fourth packet loss rate is less than the fourth threshold and/or the fourth quantity of continuously lost frames is less than the frame quantity threshold, the application function device may send, to the user equipment, an indication message that indicates the user equipment to resume normal data flow transmission. Correspondingly, the user equipment receives the indication message that is sent by the application function device and that indicates the user equipment to resume normal data flow transmission, and the user equipment sends the data flow to the radio access network device, and does not send a data flow that includes multi-frame aggregation, in other words, the user equipment no longer performs multi-frame aggregation on the data flow.

In addition, for descriptions of the first adjustment policy and the first indication message, refer to the foregoing embodiment (for example, the embodiment shown in FIG. 4A and FIG. 4B). Details are not described herein again.

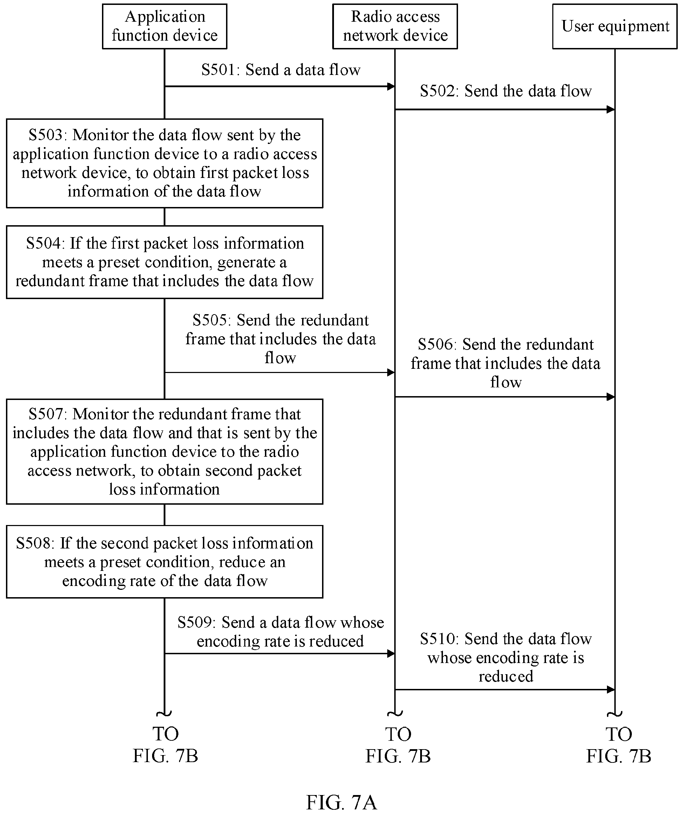

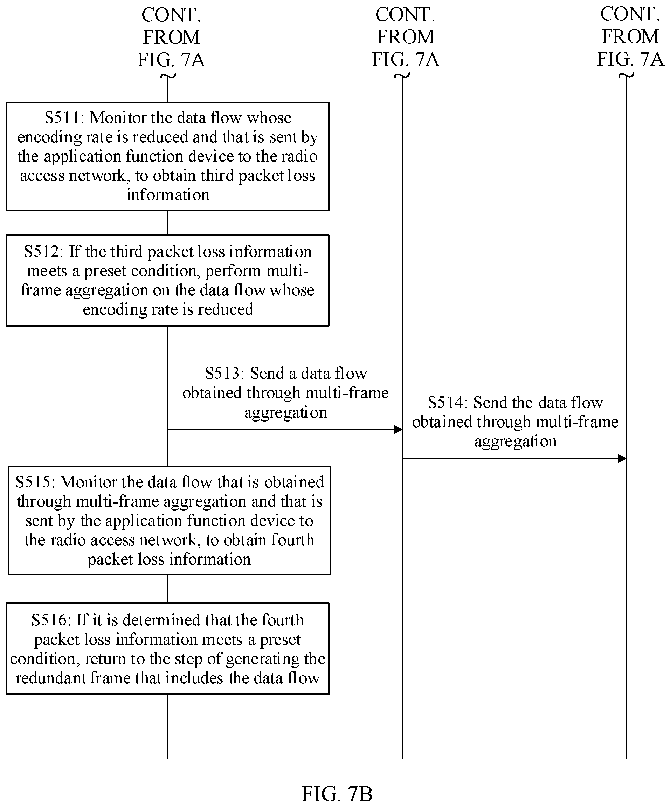

It can be learned from the foregoing analysis that, in some embodiments, the application function device may monitor the data flow sent by the user equipment by using the radio access network device, and indicate, based on monitoring information (that is, the packet loss information in the foregoing embodiment), the user equipment to adjust the data flow, to implement reliability of data flow transmission. With reference to the embodiment shown in FIG. 5, it can be learned that in some other embodiments, the application function device may still adjust the quality of service of the data flow. Details are described with reference to FIG. 7A and FIG. 7B.

As shown in FIG. 7A and FIG. 7B, the method includes the following steps.

S501: An application function device sends a data flow to a radio access network device.

Correspondingly, the radio access network device receives the data flow sent by the application function device.

For descriptions of S501, refer to S301. Details are not described herein again.

S502: The radio access network device sends the data flow to user equipment.

Correspondingly, the user equipment receives the data flow sent by the radio access network device.

S503: The application function device monitors the data flow sent by the application function device to a radio access network device, to obtain first packet loss information of the data flow.

The first packet loss information includes a first packet loss rate and/or a first quantity of continuously lost frames.

S504: If the first packet loss information meets a preset condition, the application function device generates a redundant frame that includes the data flow.

For descriptions of the first packet loss information and the preset condition, refer to the foregoing embodiment, for example, refer to content of the first packet loss information and the preset condition in S404. For descriptions of generating the redundant frame that includes the data flow, refer to the foregoing embodiment, for example, refer to content of generating the redundant frame that includes the data flow in S207. Details are not described herein again.

S505: The application function device sends the redundant frame that includes the data flow to the radio access network device.

Correspondingly, the radio access network device receives the redundant frame that includes the data flow and that is sent by the application function device.

It should be noted that, the application function device generates and sends the redundant frame that includes the data flow to the radio access network device, so that disadvantages such as a data loss caused by a packet loss can be avoided. This implements reliability of data transmission.

S506: The radio access network device sends the redundant frame that includes the data flow to the user equipment.

Correspondingly, the user equipment receives the redundant frame that includes the data flow and that is sent by the radio access network device.

S507: The application function device monitors the redundant frame that includes the data flow and that is sent by the application function device to the radio access network, to obtain second packet loss information.

For descriptions of S507, refer to S409. Details are not described herein again.

S508: If the second packet loss information meets a preset condition, the application function device reduces an encoding rate of the data flow.

Similarly, for descriptions of the second packet loss information and the preset condition, refer to the foregoing embodiment, for example, refer to content of the second packet loss information and the preset condition in S410. For descriptions of reducing the encoding rate of the data flow, refer to the foregoing embodiment, for example, refer to content of reducing the encoding rate of the data flow in S211. Details are not described herein again.

S509: The application function device sends a data flow whose encoding rate is reduced to the radio access network device.

Correspondingly, the radio access network device receives the data flow whose encoding rate is reduced and that is sent by the application function device.

S510: The radio access network device sends the data flow whose encoding rate is reduced to the user equipment.

Correspondingly, the user equipment receives the data flow whose encoding rate is reduced and that is sent by the radio access network device.

S511: The application function device monitors the data flow whose encoding rate is reduced and that is sent by the application function device to the radio access network, to obtain third packet loss information.

For descriptions of S511, refer to S415. Details are not described herein again.

S512: If the third packet loss information meets a preset condition, the application function device performs multi-frame aggregation on the data flow whose encoding rate is reduced.

Similarly, for descriptions of the third packet loss information and the preset condition, refer to the foregoing embodiment, for example, refer to content of the third packet loss information and the preset condition in S416. For descriptions of multi-frame aggregation, refer to the foregoing embodiment, for example, refer to content of multi-frame aggregation in S215. Details are not described herein again.

S513: The application function device sends a data flow obtained through multi-frame aggregation to the radio access network device.

Correspondingly, the radio access network device receives the data flow that is obtained through multi-frame aggregation and that is sent by the application function device.

S514: The radio access network device sends the data flow obtained through multi-frame aggregation to the user equipment.

Correspondingly, the user equipment receives the data flow that is obtained through multi-frame aggregation and that is sent by the radio access network device.

S515: The application function device monitors the data flow that is obtained through multi-frame aggregation and that is sent by the application function device to the radio access network, to obtain fourth packet loss information.

For descriptions of S515, refer to S421. Details are not described herein again.

S516: If the application function device determines that the fourth packet loss information meets a preset condition, a solution, for example, that the application function device generates the redundant frame that includes the data flow in S504, is returned to.

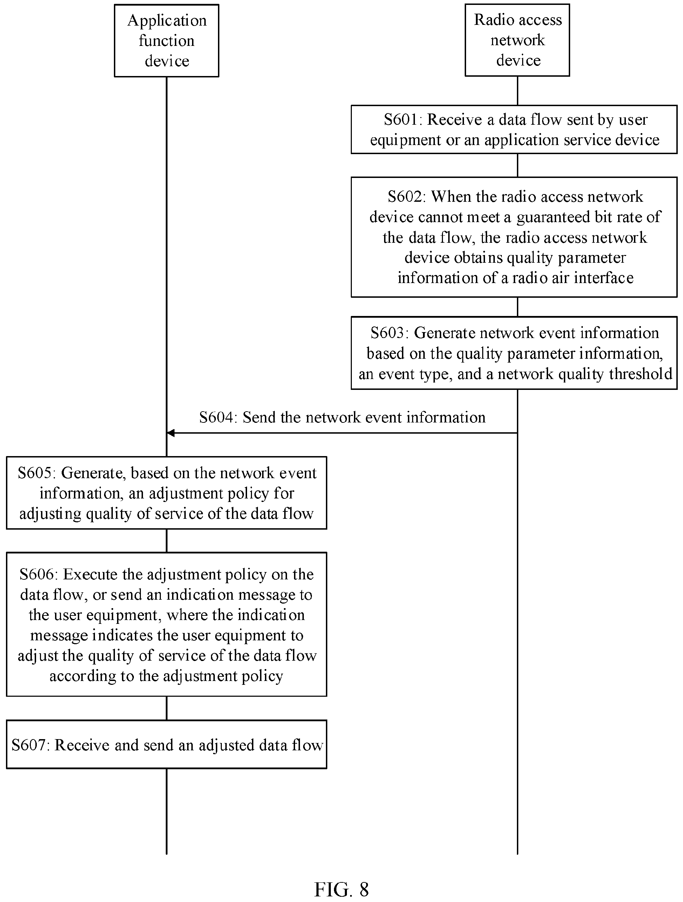

It can be learned from the foregoing analysis that the network characteristic information may include the quality parameter information and/or the network event information, and the foregoing embodiment mainly describes the communication method as an example from a perspective that the network characteristic information includes the quality parameter information. To enable a reader to better understand the communication method provided in this application, the communication method is described as an example from a dimension that the network characteristic information includes the network event information and with reference to interaction between the application function device and the radio access network device. FIG. 8 is a schematic flowchart of a communication method according to another embodiment of this application.

As shown in FIG. 8, the method includes the following steps.

S601: A radio access network device receives a data flow sent by user equipment or an application service device.

For descriptions of the data flow, refer to the foregoing examples. Details are not described herein again.

S602: When the radio access network device cannot meet a guaranteed bit rate of the data flow, the radio access network device obtains quality parameter information of a radio air interface.

For example, the quality parameter information includes but is not limited to a load parameter, a coverage parameter, and an interference parameter.

S603: The radio access network device generates network event information based on the quality parameter information, an event type, and a network quality threshold.

The event type may represent a type of a network requirement that a network of the radio air interface cannot meet. For example, if the network of the radio air interface cannot meet a type of a network load requirement, the event type may be referred to as a load event type. Similarly, if the network of the radio air interface cannot meet a type of a network interference requirement, the event type may be referred to as an interference event type. The rest can be deduced by analogy, and details are not listed herein one by one.

There is a correspondence between the event type and the network quality threshold. In other words, network quality thresholds corresponding to two different event types may be different. For example, a network quality threshold corresponding to the load event type is different from a network quality threshold corresponding to the interference event type.

This step may specifically include: The radio access network device determines, for any event type, whether the quality parameter information reaches a network quality threshold corresponding to the event type, and if the quality parameter information reaches the network quality threshold corresponding to the event type, generates the network event information.

It should be noted that, in this embodiment, for different event types, in determining, by the radio access network device, whether the quality parameter information reaches the network quality threshold corresponding to the event type, the reaching may be greater than or equal to, or may be less than or equal to.

For example, for the interference event type, the reaching may be understood as being greater than or equal to. To be specific, the radio access network device determines whether the quality parameter information is greater than or equal to a network quality threshold corresponding to the interference event type. If the quality parameter information is greater than or equal to the network quality threshold corresponding to the interference event type, the radio access network device generates the network event information, where the network event information may indicate that the network of the radio air interface cannot meet the network interference requirement.

For another example, for a coverage event type, the reaching may be understood as being less than or equal to. To be specific, the radio access network device determines whether the quality parameter information is less than or equal to a network quality threshold corresponding to the coverage event type. If the quality parameter information is less than or equal to the network quality threshold corresponding to the coverage event type, the radio access network device generates the network event information, where the network event information may indicate that the network of the radio air interface cannot meet a network coverage requirement.

It should be noted that a manner in which the radio access network device obtains the event type and the network quality threshold is not limited in this embodiment. In an example, the radio access network device may receive a subscription request that is sent by an application function device through a policy control function device and a session management function device in sequence. The subscription request carries a subscription event, the subscription event includes the event type and the network quality threshold, and the subscription event may be represented in two manners.

For example, the subscription event may be represented by the event type, the network quality threshold, and a greater-than relationship. For example, for a subscription event of an interference event, the subscription event may be represented by SINR>0.3, where SINR indicates an event type and is specifically an interference event type, 0.3 indicates a network quality threshold and specifically indicates an interference quality threshold, and > indicates a magnitude relationship and specifically indicates that the interference quality threshold of the interference event type is greater than 0.3. For example, if a signal to interference plus noise ratio of the network of the radio air interface is greater than the interference quality threshold 0.3, the radio access network device generates the network event information, where the network event information indicates that the network of the radio air interface cannot meet an interference requirement.

For another example, the subscription event may alternatively be represented by the event type and the network quality threshold. For example, for a subscription event of an interference event, the subscription event may be represented by SINR and 0.3, where SINR indicates an event type and is specifically an interference event type, and 0.3 indicates a network quality threshold and specifically indicates an interference quality threshold. For example, if a signal to interference plus noise ratio of the network of the radio air interface is greater than the interference quality threshold 0.3, the radio access network device generates the network event information, where the network event information indicates that the network of the radio air interface cannot meet an interference requirement.

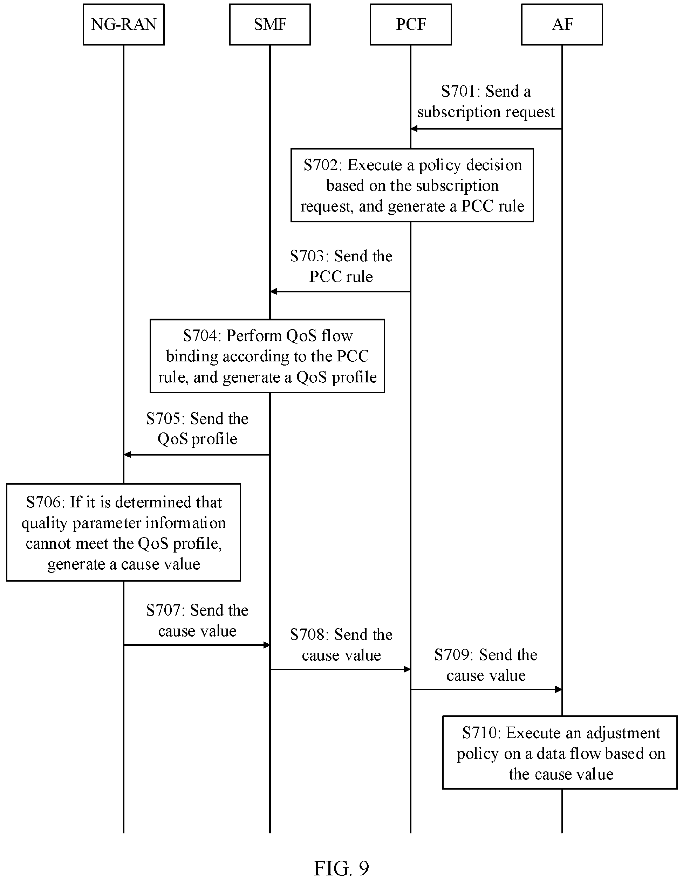

Specifically, as shown in FIG. 9, a method for triggering, by a radio access network device NG-RAN (represented by NG-RAN in FIG. 9), an application function device AF (represented by AF in FIG. 9) to perform policy adjustment may include the following steps.

S701: The application function device AF may send a subscription request (namely, a Npcf_PolicyAuthorization_Create/Update request, or a policy authorization subscription request, namely, a Npcf_PolicyAuthorization_ Subscribe/Unsubscribe request, where the subscription request is used as an example for example description in this embodiment) to a policy control function device PCF (represented by PCF in FIG. 9), and include an event type and a network quality threshold in the subscription request, where the event type may indicate a network status of a radio air interface for subscription, for example, high interference, weak coverage, and heavy load, and the network quality threshold may include a signal-to-noise ratio, channel quality of service, channel utilization, and the like. The subscription request may further include a QoS notification control indication (QNC indication). The QoS notification control indication indicates the radio access network device to monitor whether a QoS parameter meets a requirement.

Correspondingly, the policy control function device PCF receives the subscription request sent by the application function device AF.

S702: The policy control function device PCF may execute a policy decision based on the subscription request, and generate a PCC rule.

S703: The policy control function device PCF sends the PCC rule to a session management function device SMF (represented by SMF in FIG. 9). The PCC rule includes a preset QoS parameter, the event type, and the network quality threshold. The PCC rule may further include the QNC indication.

Correspondingly, the session management function device SMF receives the PCC rule sent by the policy control function device PCF.

S704: The session management function device SMF performs QoS flow binding (QoS Flow Binding) according to the PCC rule, and generates a QoS profile (QoS Profile).

S705: The session management function device SMF sends the QoS profile to the radio access network device NG-RAN. The QoS profile includes the QoS parameter, the event type, and the network quality threshold.

Correspondingly, the radio access network device NG-RAN receives the QoS profile sent by the session management function device SMF.

The QoS parameter includes at least one of: a 5QI for indexing a 5G QoS characteristic, an allocation/retention priority (Allocation/Retention Priority, ARP, including information such as a priority, a preemption capability, and preemption vulnerability, where the priority defines importance of a user equipment resource request, and when system resources are limited, the ARP may be used to determine whether a new QoS flow is to be accepted or rejected), a guaranteed flow bit rate (GFBR), and a QNC.

In another example, the radio access network device may negotiate with the application function device about the event type and the network quality threshold, and store an event type and a network quality threshold that are negotiated.

It should be noted that, in some embodiments, network event information may include event type information, where the event type information indicates that quality parameter information of the event type reaches the network quality threshold.

For example, the event type includes an interference event type and a coverage event type. Correspondingly, the network quality threshold includes a network quality threshold corresponding to the interference event type (referred to as an interference quality threshold below) and a network quality threshold corresponding to the coverage event type (referred to as a coverage quality threshold below). In this case, if the radio access network device determines that a coverage quality parameter in the quality parameter information reaches the coverage quality threshold, the radio access network generates event type information, where the event type information indicates that quality parameter information of the coverage event type (namely, the coverage quality parameter) reaches the network quality threshold (namely, the coverage quality threshold).

For example, if different event types correspond to different identifiers (QFI identifiers), the event type information generated by the radio access network device may be a QFI identifier corresponding to the event type. For example, for event type information of the coverage event type, the event type information may be a QFI identifier corresponding to the coverage event type. For another example, for event type information of the interference event type, the event type information may be a QFI identifier corresponding to the interference event type. For still another example, the event type information may include the QFI identifier corresponding to the coverage event type and the QFI identifier corresponding to the interference event. Details are not listed herein one by one.

In some other embodiments, the network event information includes the event type and a cause value corresponding to the event type. The cause value indicates that the quality parameter information reaches the network quality threshold.

For example, with reference to FIG. 9, S706: If the radio access network device NG-RAN determines, based on the QoS profile and the quality parameter information, that the quality parameter information cannot meet the QoS profile, the cause value is generated.

The cause value indicates that the quality parameter information cannot meet the QoS profile.

S707: The radio access network device NG-RAN sends the cause value to the session management function device SMF.

Correspondingly, the session management function device SMF receives the cause value sent by the radio access network device NG-RAN.

S708: The session management function device SMF sends the cause value to the policy control function device PCF.

Correspondingly, the policy control function device PCF receives the cause value sent by the session management function device SMF.

S709: The policy control function device PCF sends the cause value to the application function device AF.

Correspondingly, the application function device AF receives the cause value sent by the policy control function device PCF.

S710: The function device AF executes an adjustment policy on a data flow based on the cause value.

For example, different event types correspond to different cause values. For example, if the radio access network device determines that the coverage quality parameter reaches the coverage quality threshold, the network event information includes the coverage event type and a cause value corresponding to the coverage event type. For another example, if the radio access network device determines that the coverage quality parameter reaches the coverage quality threshold, and determines that the interference quality parameter reaches the interference quality threshold, the network event information includes the coverage event type, a cause value corresponding to the coverage event type, the interference event type, and a cause value corresponding to the interference event type. Details are not listed herein one by one.

S604: The radio access network device sends the network event information to the application function device.

Correspondingly, the application function device receives the network event information sent by the radio access network device.

Similarly, with reference to the foregoing descriptions of sending, by the application function device, the subscription request to the radio access network device, the radio access network device may alternatively send the network event information to the application function device by using the session management function device and the policy control function device in sequence.

S605: The application function device generates, based on the network event information, an adjustment policy for adjusting quality of service of the data flow.

S606: The application function device executes the adjustment policy on the data flow, or sends an indication message to the user equipment, where the indication message indicates the user equipment to adjust the quality of service of the data flow according to the adjustment policy.

S607: The application function device receives and sends an adjusted data flow.

For example, for descriptions of S605 to S607, refer to descriptions of S102 to S104. Details are not described herein again.

It should be noted that, for a method for generating and executing, by the application function device, the adjustment policy and adjusting, by the user equipment, the quality of service of the data flow according to the adjustment policy, refer to the descriptions of the foregoing embodiment. For example, if the network event information includes the event type and the cause value, and the event type is the interference event type, the application function device may determine a signal to interference plus noise ratio level corresponding to the cause value, and generate a corresponding adjustment policy. Details are not described herein.

According to another aspect of embodiments of this application, an embodiment of this application further provides an application function device.

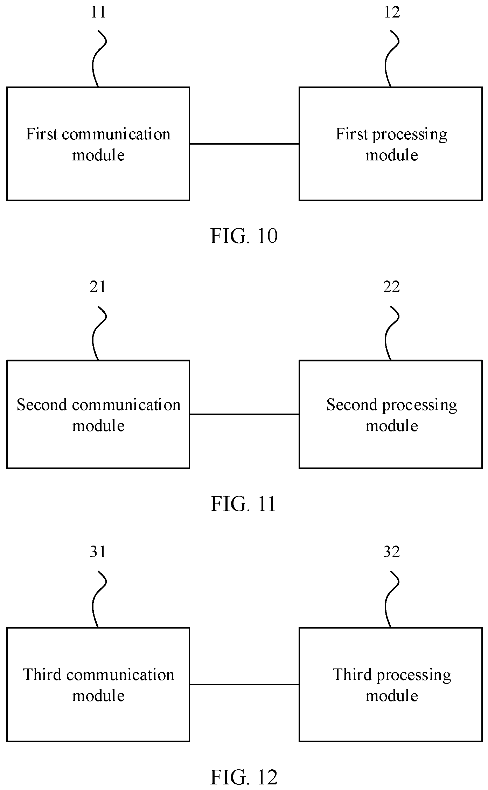

FIG. 10 is a schematic diagram of an application function device according to an embodiment of this application.

As shown in FIG. 10, the application function device includes:
a first communication module 11, configured to receive a notification message reported by a radio access network device, where the notification message indicates that the radio access network device cannot meet a guaranteed bit rate of a data flow of user equipment, and the notification message includes network characteristic information of a radio air interface; and
a first processing module 12, configured to generate, based on the network characteristic information, an adjustment policy for adjusting quality of service of the data flow, where
the first processing module 12 is configured to execute the adjustment policy on the data flow; and
the first communication module 11 is configured to send an indication message to the user equipment, where the indication message indicates the user equipment to adjust the quality of service of the data flow according to the adjustment policy.

In some embodiments, the first communication module 11 is configured to receive and send an adjusted data flow.

In some embodiments, the network characteristic information includes quality parameter information and/or network event information, and the network event information indicates that a network of the radio air interface cannot meet a preset network requirement.

In some embodiments, the quality parameter information includes signal quality parameter information and/or channel quality parameter information.

In some embodiments, the signal quality parameter information includes a signal to interference plus noise ratio level and/or a reference signal received power level.

In some embodiments, the channel quality parameter information includes a channel utilization level.

In some embodiments, the channel utilization level includes at least one of: a physical downlink control channel utilization level, a physical downlink shared channel utilization level, a physical uplink shared channel utilization level, and a channel utilization comprehensive level.

In some embodiments, if the network characteristic information includes the signal to interference plus noise ratio level, and the signal to interference plus noise ratio level meets a preset first rule, the adjustment policy includes: adjusting the quality of service of the data flow by generating a redundant frame that includes the data flow, where the first rule includes that the signal to interference plus noise ratio level is greater than a preset first threshold, or the signal to interference plus noise ratio level is less than the first threshold.

In some embodiments, if the network characteristic information includes the reference signal received power level, and the reference signal received power level meets a preset second rule, the adjustment policy includes: adjusting the quality of service of the data flow by reducing a codec rate of the data flow, where the second rule includes that the reference signal received power level is greater than a preset second threshold, or the reference signal received power level is less than the second threshold.

In some embodiments, if the network characteristic information includes the channel utilization level, and the channel utilization level meets a preset third rule, the adjustment policy includes: adjusting the quality of service of the data flow by reducing the codec rate of the data flow and performing multi-frame aggregation on a data flow whose encoding rate is reduced, where the third rule includes that the channel utilization level is greater than a preset third threshold, or the channel utilization level is less than the third threshold.

In some embodiments, the network event information is generated based on the quality parameter information of the radio air interface, an event type carried in a subscription request that is sent by the application function device to the radio access network device, and a network quality threshold that corresponds to the event type and that is carried in the subscription request.

In some embodiments, the network event information includes event type information, and the event type information indicates that quality parameter information of the event type reaches the network quality threshold.

In some embodiments, the network event information includes the event type and a cause value corresponding to the event type, and the cause value indicates that the quality parameter information reaches the network quality threshold.

According to another aspect of embodiments of this application, an embodiment of this application further provides a radio access network device.

FIG. 11 is a schematic diagram of a radio access network device according to an embodiment of this application.

As shown in FIG. 11, the radio access network device includes:
a second communication module 21, configured to: if the radio access network device cannot meet a guaranteed bit rate of a data flow of user equipment, report notification message to an application function device, where the notification message includes network characteristic information of a radio air interface, and the network characteristic information is used by the application function device to generate an adjustment policy for the data flow based on the network characteristic information, where
the second communication module 21 is configured to receive and send a data flow whose quality of service is adjusted by the application function device or the user equipment according to the adjustment policy.

In some embodiments, the network characteristic information includes quality parameter information and/or network event information, and the network event information indicates that a network of the radio air interface cannot meet a preset network requirement.

In some embodiments, the radio access network device further includes:
a second processing module 22, configured to: if the radio access network device cannot meet the guaranteed bit rate of the data flow of the user equipment, obtain the network characteristic information, and generate the notification message that includes the network characteristic information.

In some embodiments, the quality parameter information includes signal quality parameter information and/or channel quality parameter information.

In some embodiments, the signal quality parameter information includes a signal to interference plus noise ratio level and/or a reference signal received power level.

In some embodiments, the channel quality parameter information includes a channel utilization level.

In some embodiments, the channel utilization level includes at least one of: a physical downlink control channel utilization level, a physical downlink shared channel utilization level, a physical uplink shared channel utilization level, and a channel utilization comprehensive level.

In some embodiments, if the network characteristic information includes the signal to interference plus noise ratio level, and the signal to interference plus noise ratio level meets a preset first rule, the adjustment policy includes: adjusting the quality of service of the data flow by generating a redundant frame that includes the data flow, where the first rule includes that the signal to interference plus noise ratio level is greater than a preset first threshold, or the signal to interference plus noise ratio level is less than the first threshold.

In some embodiments, if the network characteristic information includes the reference signal received power level, and the reference signal received power level meets a preset second rule, the adjustment policy includes: adjusting the quality of service of the data flow by reducing a codec rate of the data flow, where the second rule includes that the reference signal received power level is greater than a preset second threshold, or the reference signal received power level is less than the second threshold.

In some embodiments, if the network characteristic information includes the channel utilization level, and the channel utilization level meets a preset third rule, the adjustment policy includes: adjusting the quality of service of the data flow by reducing the codec rate of the data flow and performing multi-frame aggregation on a data flow whose encoding rate is reduced, where the third rule includes that the channel utilization level is greater than a preset third threshold, or the channel utilization level is less than the third threshold.

In some embodiments, the network event information is generated based on the quality parameter information of the radio air interface, an event type carried in a subscription request that is sent by the application function device to the radio access network device, and a network quality threshold that corresponds to the event type and that is carried in the subscription request.

In some embodiments, the network event information includes event type information, and the event type information indicates that quality parameter information of the event type reaches the network quality threshold.

In some embodiments, the network event information includes the event type and a cause value corresponding to the event type, and the cause value indicates that the quality parameter information reaches the network quality threshold.

According to another aspect of embodiments of this application, an embodiment of this application further provides user equipment.

FIG. 12 is a schematic diagram of user equipment according to an embodiment of this application.

As shown in FIG. 12, the user equipment includes:
a third communication module 31, configured to receive an indication message sent by an application function device, where the indication message indicates the user equipment to adjust quality of service of a data flow according to an adjustment policy, and the adjustment policy is a policy that is for adjusting the quality of service of the data flow and that is generated by the application function device based on network characteristic information of a network in which the user equipment is located; and
a third processing module 32, configured to adjust the data flow according to the adjustment policy, where
the third communication module 31 is configured to send an adjusted data flow to a radio access network device.

In some embodiments, the network characteristic information includes quality parameter information and/or network event information, and the network event information indicates that a network of a radio air interface cannot meet a preset network requirement.

In some embodiments, the quality parameter information includes signal quality parameter information and/or channel quality parameter information.

In some embodiments, the signal quality parameter information includes a signal to interference plus noise ratio level and/or a reference signal received power level.

In some embodiments, the channel quality parameter information includes a channel utilization level.

In some embodiments, the channel utilization level includes at least one of: a physical downlink control channel utilization level, a physical downlink shared channel utilization level, a physical uplink shared channel utilization level, and a channel utilization comprehensive level.

In some embodiments, if the network characteristic information includes the signal to interference plus noise ratio level, and the signal to interference plus noise ratio level meets a preset first rule, the adjustment policy includes: adjusting the quality of service of the data flow by generating a redundant frame that includes the data flow, where the first rule includes that the signal to interference plus noise ratio level is greater than a preset first threshold, or the signal to interference plus noise ratio level is less than the first threshold.

In some embodiments, if the network characteristic information includes the reference signal received power level, and the reference signal received power level meets a preset second rule, the adjustment policy includes: adjusting the quality of service of the data flow by adjusting a codec rate of the data flow, where the second rule includes that the reference signal received power level is greater than a preset second threshold, or the reference signal received power level is less than the second threshold.

In some embodiments, if the network characteristic information includes the channel utilization level, and the channel utilization level meets a preset third rule, the adjustment policy includes: adjusting the quality of service of the data flow by reducing the codec rate of the data flow and performing multi-frame aggregation on a data flow whose encoding rate is reduced, where the third rule includes that the channel utilization level is greater than a preset third threshold, or the channel utilization level is less than the third threshold.

In some embodiments, the network event information is generated based on the quality parameter information of the radio air interface, an event type carried in a subscription request that is sent by the application function device to the radio access network device, and a network quality threshold that corresponds to the event type and that is carried in the subscription request.

In some embodiments, the network event information includes event type information, and the event type information indicates that quality parameter information of the event type reaches the network quality threshold.

In some embodiments, the network event information includes the event type and a cause value corresponding to the event type, and the cause value indicates that the quality parameter information reaches the network quality threshold.

According to another aspect of embodiments of this application, an embodiment of this application further provides a communication system. The system includes:
the application function device according to any one of the foregoing embodiments, for example, the application function device shown in FIG. 10;
the radio access network device according to any one of the foregoing embodiments, for example, the radio access network device shown in FIG. 11; and
the user equipment according to any one of the foregoing embodiments, for example, the user equipment shown in FIG. 12.

According to another aspect of embodiments of this application, an embodiment of this application further provides a program product. When the computer program product runs on a processor, the method according to any one of the foregoing embodiments is performed, for example, the method according to any one of embodiments shown in FIG. 3 to FIG. 7A and FIG. 7B is performed.

According to another aspect of embodiments of this application, an embodiment of this application further provides an electronic device and a readable storage medium.

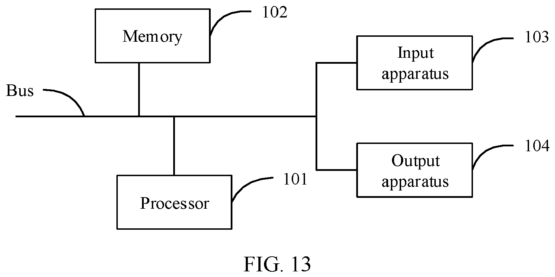

FIG. 13 is a block diagram of an electronic device according to an embodiment of this application.

The electronic device is intended to represent various forms of digital computers, such as a laptop computer, a desktop computer, a workbench, a personal digital assistant, a server, a blade server, a mainframe computer, and another suitable computer. The electronic device may also represent various forms of mobile apparatuses, such as a personal digital assistant, a cellular phone, a smartphone, a wearable device, and other similar computing apparatuses. Components shown in this specification, connections and relationships thereof, and functions thereof are merely examples, and are not intended to limit implementation of this application described and/or required in this specification.

As shown in FIG. 13, the electronic device includes one or more processors 101, a memory 102, and interfaces configured to connect components, including a high-speed interface and a low-speed interface. The components are connected to each other through different buses, and may be installed on a common mainboard or installed in another manner as required. The processor may process instructions executed in the electronic device, including instructions stored in the memory or on the memory to display graphic information of a GUI on an external input/output apparatus (for example, a display device coupled to an interface). In other implementations, a plurality of processors and/or a plurality of buses may be used together with a plurality of memories if necessary. Similarly, a plurality of electronic devices may be connected, and each device provides some necessary operations (for example, as a server array, a group of blade servers, or a multiprocessor system). In FIG. 13, one processor 101 is used as an example.

The memory 102 is a non-transitory computer-readable storage medium provided in this application. The memory stores instructions that can be executed by at least one processor, so that the at least one processor performs the communication method provided in this application. The non-transitory computer-readable storage medium in this application stores computer instructions. The computer instructions are for enabling a computer to perform the communication method provided in this application.

As the non-transitory computer-readable storage medium, the memory 102 may be configured to store a non-transitory software program, a non-transitory computer-executable program, and a module. The processor 101 runs the non-transitory software program, the instructions, and the module that are stored in the memory 102, to execute various function applications and data processing of the server, that is, implement the communication method in the foregoing method embodiments.

The memory 102 may include a program storage area and a data storage area. The program storage area may store an operating system, an application program required by at least one function, and the like. The data storage area may store data created based on use of the electronic device, and the like. In addition, the memory 102 may include a high-speed random access memory, and may further include a non-transitory memory, for example, at least one magnetic disk storage device, a flash memory device, or another non-transitory solid-state storage device. In some embodiments, the memory 102 may optionally include memories that are remotely disposed relative to the processor 101, and the remote memories may be connected to the electronic device over a network. Examples of the foregoing network include but are not limited to the Internet, an intranet, a local area network, a mobile communications network, and a combination thereof.

The electronic device may further include an input apparatus 103 and an output apparatus 104. The processor 101, the memory 102, the input apparatus 103, and the output apparatus 104 may be connected through a bus or in another manner. In FIG. 13, a bus connection is used as an example.

The input apparatus 103 may receive input digit or character information, and generate key signal input related to user setting and function control of the electronic device, for example, an input apparatus such as a touchscreen, a keypad, a mouse, a trackpad, a touchpad, an indicator rod, one or more mouse buttons, a trackball, or a joystick. The output apparatus 104 may include a display device, an auxiliary lighting apparatus (for example, an LED), a tactile feedback apparatus (for example, a vibration motor), and the like. The display device may include but is not limited to a liquid crystal display (LCD), a light emitting diode (LED) display, and a plasma display. In some implementations, the display device may be a touchscreen.

Various implementations of the system and technologies described herein may be implemented in a digital electronic circuit system, an integrated circuit system, an application-specific ASIC (application-specific integrated circuit), computer hardware, firmware, software, and/or combinations thereof. These various implementations may include being implemented in one or more computer programs. The one or more computer programs may be executed and/or interpreted in a programmable system including at least one programmable processor. The programmable processor may be a dedicated or general-purpose programmable processor, and may receive data and instructions from a storage system, at least one input apparatus, and at least one output apparatus and transmit the data and the instructions to the storage system, the at least one input apparatus, and the at least one output apparatus.

These computing programs (also referred to as programs, software, software applications, or code) include machine instructions of a programmable processor, and may be implemented by using a high-level process and/or an object-oriented programming language, and/or an assembly/machine language. As used in this specification, the terms "machine-readable medium" and "computer-readable medium" refer to any computer program product, device, and/or apparatus (for example, a magnetic disk, an optical disc, a memory, or a programmable logic apparatus (PLD)) configured to provide machine instructions and/or data to a programmable processor, and includes a machine-readable medium for receiving machine instructions as machine-readable signals. The term "machine-readable signal" refers to any signal used to provide machine instructions and/or data to a programmable processor.

To provide interaction with a user, the system and technologies described herein may be implemented on a computer, and the computer has a display apparatus (for example, a CRT (cathode ray tube) or an LCD (liquid crystal display) monitor) for displaying information to the user and a keyboard and a pointing apparatus (for example, a mouse or a trackball). The user may provide an input to the computer by using the keyboard and the pointing apparatus. Another type of apparatus may be further configured to provide interaction with the user. For example, a feedback provided for the user may be any form of sensor feedback (for example, a visual feedback, an auditory feedback, or a tactile feedback). In addition, an input from the user may be received in any form (including a sound input, a voice input, or a tactile input).

The system and technologies described herein may be implemented in a computing system including a back-end component (for example, being as a data server), a computing system including a middleware component (for example, an application server), a computing system including a front-end component (for example, a user computer having a graphical user interface or a web browser, where a user may interact with an implementation of the system and technologies described herein by using the graphical user interface or the web browser), or a computing system including any combination of the back-end component, the middleware component, or the front-end component. Components of the system may be interconnected through any form or medium digital data communication (for example, a communication network). Examples of the communication network include a local area network (LAN), a wide area network (WAN), and the internet.

The computer system can include clients and servers. The client and the server are usually far away from each other and usually interact over the communication network. A relationship between the client and the server is generated by running computer programs, having a client-server relationship with each other, on corresponding computers.

## Claims

1. A communication method, applied to an application function device, wherein the method comprises:
receiving (S203) a notification message reported by a radio access network device, wherein the notification message indicates that the radio access network device cannot meet a guaranteed bit rate of a data flow of user equipment, and the notification message comprises network characteristic information of a radio air interface;
generating (S204), based on the network characteristic information, a first adjustment policy for adjusting quality of service of the data flow;
sending (S205) a first indication message to the user equipment, wherein the first indication message indicates the user equipment to adjust the quality of service of the data flow according to the first adjustment policy;
if the network characteristic information does not include a predefined signal to interference plus noise ratio level, or the signal to interference plus noise ratio level is less than the first threshold, generating (S208), based on the network characteristic information, a second indication message that includes a second adjustment policy for adjusting quality of service of the data flow, wherein the second indication message indicates the user equipment to adjust the quality of service of the data flow according to the second adjustment policy, and sending (S209) the second indication message to the user equipment; and
if the network characteristic information does not include a received reference signal power level, or the received reference signal power level is less than the second threshold, generating (S212), based on the network characteristic information, a third indication message that includes a third adjustment policy for adjusting quality of service for the data flow, wherein the third indication message indicates the user equipment to adjust the quality of service of the data flow according to the third adjustment policy, and sending (S213) the third indication message to the user equipment;
wherein the first, the second, and the third adjustment policy indicate different adjustments based on different metrics.

2. The method according to claim 1, wherein the network characteristic information comprises quality parameter information and/or network event information, and the network event information indicates that a network of the radio air interface cannot meet a preset network requirement.

3. The method according to claim 2, wherein the quality parameter information comprises signal quality parameter information and/or channel quality parameter information.

4. The method according to claim 3, wherein the signal quality parameter information comprises a signal to interference plus noise ratio level and/or a reference signal received power level.

5. The method according to claim 3, wherein the channel quality parameter information comprises a channel utilization level.

6. The method according to any one of claims 2 to 5, wherein the network event information is generated based on the quality parameter information of the radio air interface, an event type carried in a subscription request that is sent by the application function device to the radio access network device, and a network quality threshold that corresponds to the event type and that is carried in the subscription request.

7. A communication method, applied to a radio access network device, wherein the method comprises:
if the radio access network device cannot meet a guaranteed bit rate of a data flow of user equipment, reporting (S202) a notification message to an application function device, wherein the notification message comprises network characteristic information of a radio air interface, and the network characteristic information is used by the application function device to generate a first adjustment policy for the data flow based on the network characteristic information;
receiving (S207) a data flow whose quality of service is adjusted by the user equipment according to the first adjustment policy;
receiving (S211) a data flow whose quality of service is adjusted by the user equipment according to a second adjustment policy; and
receiving (S215) a data flow whose quality of service is adjusted by the user equipment according to a third adjustment policy;
wherein the first, the second, and the third adjustment policy indicate different adjustments based on different metrics.

8. The method according to claim 7, wherein the network characteristic information comprises quality parameter information and/or network event information, and the network event information indicates that a network of the radio air interface cannot meet a preset network requirement.

9. The method according to claim 8, wherein the quality parameter information comprises signal quality parameter information and/or channel quality parameter information.

10. The method according to claim 9, wherein the signal quality parameter information comprises a signal to interference plus noise ratio level and/or a reference signal received power level.

11. The method according to claim 9, wherein the channel quality parameter information comprises a channel utilization level.

12. The method according to any one of claims 8 to 11, wherein the network event information is generated based on the quality parameter information of the radio air interface, an event type carried in a subscription request that is sent by the application function device to the radio access network device, and a network quality threshold that corresponds to the event type and that is carried in the subscription request.

13. A communication method, applied to user equipment, wherein the method comprises:
receiving (S205) a first indication message sent by an application function device, wherein the indication message indicates the user equipment to adjust quality of service of a data flow according to a first adjustment policy, and the first adjustment policy is a policy that is for adjusting the quality of service of the data flow and that is generated by the application function device based on network characteristic information of a network in which the user equipment is located;
adjusting (S206) the data flow according to the first adjustment policy;
sending (S207) an adjusted data flow to a radio access network device;
in response to receiving (S209) a second indication message sent by the application function device, wherein the second indication message indicates the user equipment to adjust quality of service of the data flow according to a second adjustment policy, adjusting (S210) the data flow according to the second adjustment policy, and sending (S211) an adjusted data flow to the radio access network device;
in response to receiving (S213) a third indication message sent by the application function device, wherein the third indication message indicates the user equipment to adjust quality of service of the data flow according to a third adjustment policy, adjusting (S214) the data flow according to the third adjustment policy, and sending (S215) an adjusted data flow to the radio access network device;
wherein the first, the second, and the third adjustment policy indicate different adjustments based on different metrics.

14. The method according to claim 13, wherein the network characteristic information comprises quality parameter information and/or network event information, and the network event information indicates that a network of a radio air interface cannot meet a preset network requirement.

15. The method according to claim 14, wherein the quality parameter information comprises signal quality parameter information and/or channel quality parameter information.

## Patentansprüche

1. Kommunikationsverfahren, das auf eine Anwendungsfunktionsvorrichtung angewendet wird, wobei das Verfahren Folgendes umfasst:
Empfangen (S203) einer von einer Funkzugangsnetzvorrichtung gemeldeten Benachrichtigungsnachricht, wobei die Benachrichtigungsnachricht angibt, dass die Funkzugangsnetzvorrichtung eine garantierte Bitrate eines Datenflusses eines Benutzergeräts nicht einhalten kann, und die Benachrichtigungsnachricht Netzwerkmerkmalinformationen einer Funkschnittstelle umfasst;
Generieren (S204) einer ersten Anpassungsrichtlinie zum Anpassen von Dienstqualität des Datenflusses basierend auf den Netzwerkmerkmalinformationen;
Senden (S205) einer ersten Hinweisnachricht an das Benutzergerät, wobei die erste Hinweisnachricht dem Benutzergerät angibt, die Dienstqualität des Datenflusses gemäß der ersten Anpassungsrichtlinie anzupassen;
wenn die Netzwerkmerkmalinformationen keinen vordefinierten Signal-zu-Interferenz-plus-Rausch-Verhältnispegel einschließen oder der Signal-zu-Interferenz-plus-Rausch-Verhältnispegel unter dem ersten Schwellenwert liegt, Generieren (S208) einer zweiten Hinweisnachricht basierend auf den Netzwerkmerkmalinformationen, die eine zweite Anpassungsrichtlinie zum Anpassen von Dienstqualität des Datenflusses einschließt, wobei die zweite Hinweisnachricht dem Benutzergerät angibt, die Dienstqualität des Datenflusses gemäß der zweiten Anpassungsrichtlinie anzupassen, und Senden (S209) der zweiten Hinweisnachricht an das Benutzergerät; und
wenn die Netzwerkcharakteristikinformationen keinen empfangenen Referenzsignalleistungspegel einschließen oder der empfangene Referenzsignalleistungspegel unter dem zweiten Schwellenwert liegt, Generieren (S212) einer dritten Hinweisnachricht basierend auf den Netzwerkmerkmalinformationen, die eine dritte Anpassungsrichtlinie zum Anpassen von Dienstqualität für den Datenfluss einschließt, wobei die dritte Hinweisnachricht dem Benutzergerät angibt, die Dienstqualität des Datenflusses gemäß der dritten Anpassungsrichtlinie anzupassen, und Senden (S213) der dritten Hinweisnachricht an das Benutzergerät;
wobei die erste, die zweite und die dritte Anpassungsrichtlinie unterschiedliche Anpassungen basierend auf unterschiedlichen Metriken angeben.

2. Verfahren nach Anspruch 1, wobei die Netzwerkmerkmalinformationen Qualitätsparameterinformationen und/oder Netzwerkereignisinformationen umfassen und die Netzwerkereignisinformationen angeben, dass ein Netzwerk der Funkschnittstelle eine voreingestellte Netzwerkanforderung nicht erfüllen kann.

3. Verfahren nach Anspruch 2, wobei die Qualitätsparameterinformationen Signalqualitätsparameterinformationen und/oder Kanalqualitätsparameterinformationen umfassen.

4. Verfahren nach Anspruch 3, wobei die Signalqualitätsparameterinformationen einen Signal-zu-Interferenz-plus-Rausch-Verhältnispegel und/oder einen Referenzsignal-Leistungsaufnahmepegel umfassen.

5. Verfahren nach Anspruch 3, wobei die Kanalqualitätsparameterinformationen einen Kanalauslastungspegel umfassen.

6. Verfahren nach einem der Ansprüche 2 bis 5, wobei die Netzwerkmerkmalinformationen basierend auf den Qualitätsparameterinformationen der Funkschnittstelle, einem Ereignistyp, der in einer Abonnementanforderung enthalten ist, die von der Anwendungsfunktionsvorrichtung an die Funkzugangsnetzvorrichtung gesendet wird, und einem Netzwerkqualitätsschwellenwert, der dem Ereignistyp entspricht und in der Abonnementanforderung enthalten ist, generiert werden.

7. Kommunikationsverfahren, das auf eine Funkzugriffsnetzvorrichtung angewendet wird, wobei das Verfahren Folgendes umfasst:
wenn die Funkzugriffsnetzvorrichtung eine garantierte Bitrate eines Datenflusses eines Benutzergeräts nicht einhalten kann, Melden (S202) einer Benachrichtigungsnachricht an eine Anwendungsfunktionsvorrichtung, wobei die Benachrichtigungsnachricht Netzwerkmerkmalinformationen einer Funkschnittstelle umfasst und die Netzwerkmerkmalinformationen von der Anwendungsfunktionsvorrichtung verwendet werden, um basierend auf den Netzwerkmerkmalinformationen eine erste Anpassungsrichtlinie für den Datenfluss zu generieren;
Empfangen (S207) eines Datenflusses, dessen Dienstqualität durch das Benutzergerät gemäß der ersten Anpassungsrichtlinie angepasst wird;
Empfangen (S211) eines Datenflusses, dessen Dienstqualität durch das Benutzergerät gemäß der zweiten Anpassungsrichtlinie angepasst wird; und
Empfangen (S215) eines Datenflusses, dessen Dienstqualität durch das Benutzergerät gemäß einer dritten Anpassungsrichtlinie angepasst wird;
wobei die erste, die zweite und die dritte Anpassungsrichtlinie unterschiedliche Anpassungen basierend auf unterschiedlichen Metriken angeben.

8. Verfahren nach Anspruch 7, wobei die Netzwerkmerkmalinformationen Qualitätsparameterinformationen und/oder Netzwerkereignisinformationen umfassen und die Netzwerkereignisinformationen angeben, dass ein Netzwerk der Funkschnittstelle eine voreingestellte Netzwerkanforderung nicht erfüllen kann.

9. Verfahren nach Anspruch 8, wobei die Qualitätsparameterinformationen Signalqualitätsparameterinformationen und/oder Kanalqualitätsparameterinformationen umfassen.

10. Verfahren nach Anspruch 9, wobei die Signalqualitätsparameterinformationen einen Signal-zu-Interferenz-plus-Rausch-Verhältnispegel und/oder einen Referenzsignal-Leistungsaufnahmepegel umfassen.

11. Verfahren nach Anspruch 9, wobei die Kanalqualitätsparameterinformationen einen Kanalauslastungspegel umfassen.

12. Verfahren nach einem der Ansprüche 8 bis 11, wobei die Netzwerkmerkmalinformationen basierend auf den Qualitätsparameterinformationen der Funkschnittstelle, einem Ereignistyp, der in einer Abonnementanforderung enthalten ist, die von der Anwendungsfunktionsvorrichtung an die Funkzugangsnetzvorrichtung gesendet wird, und einem Netzwerkqualitätsschwellenwert, der dem Ereignistyp entspricht und in der Abonnementanforderung enthalten ist, generiert werden.

13. Kommunikationsverfahren, das auf ein Benutzergerät angewendet wird, wobei das Verfahren Folgendes umfasst:
Empfangen (S205) einer ersten Hinweisnachricht, die von einer Anwendungsfunktionsvorrichtung gesendet wird, wobei die Hinweisnachricht dem Benutzergerät angibt, eine Dienstqualität eines Datenflusses gemäß einer ersten Anpassungsrichtlinie anzupassen, und die erste Anpassungsrichtlinie eine Richtlinie ist, die zum Anpassen der Dienstqualität des Datenflusses dient und die von der Anwendungsfunktionsvorrichtung basierend auf Netzwerkmerkmalinformationen eines Netzwerks generiert wird, in dem sich das Benutzergerät befindet;
Anpassen (S206) des Datenflusses gemäß der ersten Anpassungsrichtlinie;
Senden (S207) eines angepassten Datenflusses an eine Funkzugriffsnetzvorrichtung;
als Reaktion auf das Empfangen (S209) einer zweiten Hinweisnachricht, die von der Anwendungsfunktionsvorrichtung gesendet wird, wobei die zweite Hinweisnachricht dem Benutzergerät angibt, eine Dienstqualität des Datenflusses gemäß einer zweiten Anpassungsrichtlinie anzupassen, Anpassen (S210) des Datenflusses gemäß der zweiten Anpassungsrichtlinie und Senden (S211) eines angepassten Datenflusses an die Funkzugangsnetzvorrichtung;
als Reaktion auf das Empfangen (S213) einer dritten Hinweisnachricht, die von der Anwendungsfunktionsvorrichtung gesendet wird, wobei die dritte Hinweisnachricht dem Benutzergerät angibt, eine Dienstqualität des Datenflusses gemäß einer dritten Anpassungsrichtlinie anzupassen, Anpassen (S214) des Datenflusses gemäß der dritten Anpassungsrichtlinie und Senden (S215) eines angepassten Datenflusses an die Funkzugangsnetzvorrichtung;
wobei die erste, die zweite und die dritte Anpassungsrichtlinie unterschiedliche Anpassungen basierend auf unterschiedlichen Metriken angeben.

14. Verfahren nach Anspruch 13, wobei die Netzwerkmerkmalinformationen Qualitätsparameterinformationen und/oder Netzwerkereignisinformationen umfassen und die Netzwerkereignisinformationen angeben, dass ein Netzwerk einer Funkschnittstelle eine voreingestellte Netzwerkanforderung nicht erfüllen kann.

15. Verfahren nach Anspruch 14, wobei die Qualitätsparameterinformationen Signalqualitätsparameterinformationen und/oder Kanalqualitätsparameterinformationen umfassen.

## Revendications

1. Procédé de communication, appliqué à un dispositif de fonction d'application, dans lequel le procédé comprend :
la réception (S203) d'un message de notification signalé par un dispositif de réseau d'accès radio, dans lequel le message de notification indique que le dispositif de réseau d'accès radio ne peut pas satisfaire un débit binaire garanti d'un flux de données d'un équipement utilisateur, et le message de notification comprend des informations caractéristiques du réseau d'une interface radio aérienne ;
la génération (S204), sur la base des informations caractéristiques du réseau, d'une première politique d'ajustement pour ajuster la qualité de service du flux de données ;
l'envoi (S205) d'un premier message d'indication à l'équipement utilisateur, dans lequel le premier message d'indication indique à l'équipement utilisateur d'ajuster la qualité de service du flux de données selon la première politique d'ajustement ;
si les informations caractéristiques du réseau ne comportent pas un niveau prédéfini de rapport signal sur interférence plus bruit, ou si le niveau de rapport signal sur interférence plus bruit est inférieur au premier seuil, la génération (S208), sur la base des informations caractéristiques du réseau, d'un deuxième message d'indication qui comporte une deuxième politique d'ajustement pour ajuster la qualité de service du flux de données, dans lequel le deuxième message d'indication indique à l'équipement utilisateur d'ajuster la qualité de service du flux de données selon la deuxième politique d'ajustement, et l'envoi (S209) du deuxième message d'indication à l'équipement utilisateur ; et
si les informations caractéristiques du réseau ne comportent pas un niveau de puissance du signal de référence reçu, ou si le niveau de puissance du signal de référence reçu est inférieur au second seuil, la génération (S212), sur la base des informations caractéristiques du réseau, d'un troisième message d'indication qui comporte une troisième politique d'ajustement pour ajuster la qualité de service du flux de données, dans lequel le troisième message d'indication indique à l'équipement utilisateur d'ajuster la qualité de service du flux de données selon la troisième politique d'ajustement, et l'envoi (S213) du troisième message d'indication à l'équipement utilisateur ;
dans lequel la première, la deuxième et la troisième politique d'ajustement indiquent des ajustements différents sur la base de métriques différentes.

2. Procédé selon la revendication 1, dans lequel les informations caractéristiques du réseau comprennent des informations de paramètre de qualité et/ou des informations d'événement de réseau, et les informations d'événement de réseau indiquent qu'un réseau de l'interface radio aérienne ne peut pas satisfaire une exigence de réseau prédéfinie.

3. Procédé selon la revendication 2, dans lequel les informations de paramètre de qualité comprennent des informations de paramètre de qualité de signal et/ou des informations de paramètre de qualité de canal.

4. Procédé selon la revendication 3, dans lequel les informations de paramètre de qualité de signal comprennent un niveau de rapport signal sur interférence plus bruit et/ou un niveau de puissance reçue du signal de référence.

5. Procédé selon la revendication 3, dans lequel les informations de paramètre de qualité de canal comprennent un niveau d'utilisation de canal.

6. Procédé selon l'une quelconque des revendications 2 à 5, dans lequel les informations d'événement de réseau sont générées sur la base des informations de paramètre de qualité de l'interface radio aérienne, d'un type d'événement transporté dans une demande d'abonnement qui est envoyée par le dispositif de fonction d'application au dispositif de réseau d'accès radio, et d'un seuil de qualité de réseau qui correspond au type d'événement et qui est transporté dans la demande d'abonnement.

7. Procédé de communication, appliqué à un dispositif de réseau d'accès radio, dans lequel le procédé comprend :
si le dispositif de réseau d'accès radio ne peut pas satisfaire un débit binaire garanti d'un flux de données d'un équipement utilisateur, le fait de signaler (S202) un message de notification à un dispositif de fonction d'application, dans lequel le message de notification comprend des informations caractéristiques du réseau d'une interface radio aérienne, et les informations caractéristiques du réseau sont utilisées par le dispositif de fonction d'application pour générer une première politique d'ajustement pour le flux de données sur la base des informations caractéristiques du réseau ;
la réception (S207) d'un flux de données dont la qualité de service est ajustée par l'équipement utilisateur selon la première politique d'ajustement ;
la réception (S211) d'un flux de données dont la qualité de service est ajustée par l'équipement utilisateur selon une deuxième politique d'ajustement ; et
la réception (S215) d'un flux de données dont la qualité de service est ajustée par l'équipement utilisateur selon une troisième politique d'ajustement ;
dans lequel la première, la deuxième et la troisième politique d'ajustement indiquent des ajustements différents sur la base de métriques différentes.

8. Procédé selon la revendication 7, dans lequel les informations caractéristiques du réseau comprennent des informations de paramètre de qualité et/ou des informations d'événement de réseau, et les informations d'événement de réseau indiquent qu'un réseau de l'interface radio aérienne ne peut pas satisfaire une exigence de réseau prédéfinie.

9. Procédé selon la revendication 8, dans lequel les informations de paramètre de qualité comprennent des informations de paramètre de qualité de signal et/ou des informations de paramètre de qualité de canal.

10. Procédé selon la revendication 9, dans lequel les informations de paramètre de qualité de signal comprennent un niveau de rapport signal sur interférence plus bruit et/ou un niveau de puissance reçue du signal de référence.

11. Procédé selon la revendication 9, dans lequel les informations de paramètre de qualité de canal comprennent un niveau d'utilisation de canal.

12. Procédé selon l'une quelconque des revendications 8 à 11, dans lequel les informations d'événement de réseau sont générées sur la base des informations de paramètre de qualité de l'interface radio aérienne, d'un type d'événement transporté dans une demande d'abonnement qui est envoyée par le dispositif de fonction d'application au dispositif de réseau d'accès radio, et d'un seuil de qualité de réseau qui correspond au type d'événement et qui est transporté dans la demande d'abonnement.

13. Procédé de communication appliqué à un équipement utilisateur, dans lequel le procédé comprend :
la réception (S205) d'un premier message d'indication envoyé par un dispositif de fonction d'application, dans lequel le message d'indication indique à l'équipement utilisateur d'ajuster la qualité de service d'un flux de données selon une première politique d'ajustement, et la première politique d'ajustement est une politique qui sert à ajuster la qualité de service du flux de données et qui est générée par le dispositif de fonction d'application sur la base d'informations caractéristiques du réseau d'un réseau dans lequel l'équipement utilisateur est situé ;
l'ajustement (S206) du flux de données selon la première politique d'ajustement ;
l'envoi (S207) d'un flux de données ajusté à un dispositif de réseau d'accès radio ;
en réponse à la réception (S209) d'un deuxième message d'indication envoyé par le dispositif de fonction d'application, dans lequel le deuxième message d'indication indique à l'équipement utilisateur d'ajuster la qualité de service du flux de données selon une deuxième politique d'ajustement, l'ajustement (S210) du flux de données selon la deuxième politique d'ajustement, et l'envoi (S211) d'un flux de données ajusté au dispositif de réseau d'accès radio ;
en réponse à la réception (S213) d'un troisième message d'indication envoyé par le dispositif de fonction d'application, dans lequel le troisième message d'indication indique à l'équipement utilisateur d'ajuster la qualité de service du flux de données selon une troisième politique d'ajustement, l'ajustement (S214) du flux de données selon la troisième politique d'ajustement, et l'envoi (S215) d'un flux de données ajusté au dispositif de réseau d'accès radio ;
dans lequel la première, la deuxième et la troisième politique d'ajustement indiquent des ajustements différents sur la base de métriques différentes.

14. Procédé selon la revendication 13, dans lequel les informations caractéristiques du réseau comprennent des informations de paramètre de qualité et/ou des informations d'événement de réseau, et les informations d'événement de réseau indiquent qu'un réseau de l'interface radio aérienne ne peut pas satisfaire une exigence de réseau prédéfinie.

15. Procédé selon la revendication 14, dans lequel les informations de paramètre de qualité comprennent des informations de paramètre de qualité de signal et/ou des informations de paramètre de qualité de canal.
